# EUROPEAN PATENT SPECIFICATION

(11) **EP 4 203 541 B1**
(45) Date of publication and mention of the grant of the patent: **24.09.2025**
(21) Application number: 21216306.7
(22) Date of filing: 21.12.2021
(51) Int. Cl.: H04W 24/02

(54) **USER PLANE FUNCTION (UPF) DECOMPOSITION**
BENUTZEREBENENFUNKTIONSZERLEGUNG
DÉCOMPOSITION D'UNE FONCTION DE PLAN UTILISATEUR (UPF)

(43) Date of publication of application: 28.06.2023
(73) Proprietor: Nokia Technologies Oy, 02610 Espoo (FI)
(72) Inventor: GKELLAS, Georgios, 13232 Petroupoli (GR); LANDAIS, Bruno, 22560 Pleumeur-Bodou (FR); THIEBAUT, Laurent, 92160 Antony (FR); HE, Mu, 80639 Munich (DE)
(74) Representative: Nokia EPO representatives

(56) References cited:
- WO-A1-2019/168458
- WO-A1-2019/221646
- WO-A1-2021/063767

## Description

### Field

The present disclosure relates to a User Plane Function (UPF) decomposition. More specifically, the present disclosure relates to measures/mechanisms (including methods, apparatuses (i.e. devices, entities, elements, instances and/or functions) and computer program products) for enabling/realizing a User Plane Function (UPF) decomposition in a mobile communication system.

### Background

The present disclosure basically relates to an effective realization/configuration of a user plane function element or instance, briefly referred to as UPF, in a mobile communication system, such as 5G/NR systems and next generation systems beyond 5G. In this regard, decomposition and/or modularization of an UPF is addressed in terms of the exposure and discovery of its features or functionalities.

Recently, mobile communication systems are increasingly deployed in cloud environments. For enabling mobile communication systems to be flexible by adding new functionalities capitalizing on cloud implementations, a service-based architecture (SBA) is implemented, in which network functions are represented in a service-based manner. In a service-based architecture (SBA), network functions enable other authorized network functions to access their services, and service-based interfaces are defined, through which such service accesses among such network functions are enabled.

In 3GPP standardization, the paradigm of service-based architecture (SBA) is currently introduced and applied for the control plane (CP) in the 5GC (5G Core), wherein producer functions of the control plane, such as e.g. AMF, SMF, PCF, etc. are decomposed.

WO2019168458 describes the requesting of flexible user-plane services in a service-based architecture.

### Summary

The paradigm of service-based architecture (SBA) is not effectively applicable for the user plane (UP) including the UPF, which is thus not yet integrated in the service-based architecture (SBA).

This is due to the fact that such an approach, including decomposing user plane functions in services, would severely affect the UPF performance and the end-to-end latency. On the one hand, after each packet is processed by a service it should be forwarded to the next one, but packet forwarding among services and subsequent packet handling by each service degrades the performance of the UPF and induces latency. On the other hand, latency and performance degradation could become even more unacceptable, if one tries to extend the whole SBA concept to incorporate the UPF, i.e. each packet after being handled by a service is forwarded to a module similar to the SCP in the control plane, which discovers the next service and forwards the packet to it. Hence, defining UPF services under the SBA paradigm for enabling their exposure to and discovery by their consumer(s) is not effective for UPF realization/configuration in a mobile communication system in terms of its decomposition and/or modularization.

In 3GPP standardization, a UPF exposure service is introduced, offering QoS information to the NEF or an AF in a local Data Centre (DC), and it is expected that the same service could also be further utilized in other use cases, e.g. to propagate information from the UPF to the NWDAF for analytics.

In 3GPP standardization, a UPF is only selected by an SMF. When the SMF selects a UPF, it handles the UPF as a "monolithic" block/entity. That is, the SMF has no visibility on any internal UPF structure/modularization. For example, the SMF takes into consideration what features or functionalities are required to be supported for a PDU session and takes into consideration the slice of the PDU session, the location of candidate UPFs, load, etc. for selecting a UPF based thereon, with the thus selected UPF instance acting as a "monolithic" block/entity from the SMF's point of view.

A UPF might support multiple "network instances", configured also in the SMF or discovered by the SMF with the help of the NRF via the UPF profile. A "network instance" may be provided to a UPF by the SMF in session establishment/modification procedures, wherein the SMF determines the "network instance" for the various interfaces, such as N3, N6, N9, etc., taking into consideration input like DNN, S-NSSAI, UE location, or the like. While a "network instance" can be a means to expose some UPF decomposition, it is not effective for UPF realization/configuration in a mobile communication system in terms of its decomposition and/or modularization.

Therefore, there is room for improving the existing technology to develop a technique for (enabling/realizing) a User Plane Function (UPF) decomposition in a mobile communication system. In particular, there is room for improving the existing technology to develop a technique for an effective UPF realization/configuration in terms of its decomposition and/or modularization, thus enabling to expose its decomposed modules or functional entities (i.e. the thus achievable features or functionalities) and/or make its decomposed modules or functional entities (i.e. the thus achievable features or functionalities) discoverable.

Various exemplifying embodiments of the present disclosure aim at addressing at least part of the above issues and/or problems and drawbacks.

Various aspects of exemplifying embodiments are described in the present disclosure and the invention is set out in the appended claims.

According to an example aspect of the present disclosure, there is provided an apparatus of (or, stated in other words, operable or for use in/by) a user plane function element or instance in a mobile communication system, comprising: means for configuring a user plane function decomposition structure for decomposing a functionality of the user plane function element or instance, said structure comprising multiple entities and multiple identifiers, each entity being dedicated to perform at least part of the functionality of the user plane function element or instance and being associated to one of the identifiers, each identifier corresponding to at least part of the functionality of the user plane function element or instance and being associated to or more of the entities, and the entities associated to a same identifier belonging to a same entity set defining a set of entities which are functionally equivalent, interchangeable and sharing context data, and means for advertising information on the user plane function decomposition structure.

According to an example aspect of the present disclosure, there is provided an apparatus of (or, stated in other words, operable or for use in/by) a user plane function element or instance in a mobile communication system, the apparatus comprising at least one processor and at least one memory including computer program code, wherein the processor, with the at least one memory and the computer program code, is configured to cause the apparatus to perform: configuring a user plane function decomposition structure for decomposing a functionality of the user plane function element or instance, said structure comprising multiple entities and multiple identifiers, each entity being dedicated to perform at least part of the functionality of the user plane function element or instance and being associated to one of the identifiers, each identifier corresponding to at least part of the functionality of the user plane function element or instance and being associated to or more of the entities, and the entities associated to a same identifier belonging to a same entity set defining a set of entities which are functionally equivalent, interchangeable and sharing context data, and advertising information on the user plane function decomposition structure.

According to an example aspect of the present disclosure, there is provided a method of (or, stated in other words, operable or for use in/by) a user plane function element or instance in a mobile communication system, comprising: configuring a user plane function decomposition structure for decomposing a functionality of the user plane function element or instance, said structure comprising multiple entities and multiple identifiers, each entity being dedicated to perform at least part of the functionality of the user plane function element or instance and being associated to one of the identifiers, each identifier corresponding to at least part of the functionality of the user plane function element or instance and being associated to or more of the entities, and the entities associated to a same identifier belonging to a same entity set defining a set of entities which are functionally equivalent, interchangeable and sharing context data, and advertising information on the user plane function decomposition structure.

According to various developments/modifications, any one of the aforementioned method-related and/or apparatus-related example aspects of the present disclosure may include one or more of the following features:
in said structure, each entity has an address for controlling a service, session or traffic via the user plane function element or instance, by which the entity is addressable by another network element or instance, such as a session management function element or instance,
said aforementioned structure comprises a front-end entity for each entity, the address of any entity being or corresponding to an address of its front-end entity, by which the entity is addressable,
the information on the user plane function decomposition structure comprises an indication of the entities in said structure and properties of the individual entities,
the aforementioned properties comprise support characteristics of the individual entities, indicating one or more of supported network or traffic features, parameters or elements, per identity,
the method, functionality or operability comprises triggering another network element or function, such as a session management function element or instance, to select, from an entity set, one entity for performing a transaction in controlling a service, session or traffic via the user plane function element or instance,
the triggering is performed based on a command, instruction or information for selecting an entity in the entity set for performing the transaction from another network element or instance, such as a session management function element or instance, and/or in response to a command, instruction or information for changing, in the entity set, an entity for performing the transaction from an entity in the entity set or a control entity of the user plane function element or instance,
in said structure, each entity set has an address for controlling a service, session or traffic via the user plane function element or instance, by which the entity set is addressable by another network element or instance, such as a session management function element or instance,
said aforementioned structure comprises a front-end entity for each entity set, the address of any entity set being or corresponding to an address of its front-end entity, by which the entity set is addressable,
the information on the user plane function decomposition structure comprises an indication of the entity sets in said structure and properties of the individual entity sets,
the aforementioned properties comprise support characteristics of the individual entity sets, indicating one or more of supported network or traffic features, parameters or elements, per identity,
the method, functionality or operability comprises selecting, from an entity set, one entity for performing a transaction in controlling a service, session or traffic via the user plane function element or instance,
the selecting is performed based on a command, instruction or information for selecting the entity set for performing the transaction from another network element or instance, such as a session management function element or instance, and/or in response to a command, instruction or information for changing, in the entity set, an entity for performing the transaction from an entity in the entity set or a control entity of the user plane function element or instance,
the advertising comprises transferring the information on the user plane function decomposition structure to at least one other element or instance, such as a network repository function element or instance and/or an operations, administration and maintenance element or instance,
the advertising comprises initiating configuration of the information on the user plane function decomposition structure in at least one other element or instance, such as a network repository function element or instance and/or an operations, administration and maintenance element or instance and/or a session management function element or instance,
each entity in said structure is or comprises a functional module for controlling a service, a session or traffic according to a predetermined protocol, such as a packet forwarding control protocol,
each entity and/or entity set is configured to support independent life-cycle management.

According to an example aspect of the present disclosure, there is provided an apparatus of (or, stated in other words, operable or for use in/by) a session management function element or instance in a mobile communication system, comprising: means for obtaining information on a user plane function decomposition structure of a user plane function element or instance, said structure comprising multiple entities and multiple identifiers, each entity being dedicated to perform at least part of the functionality of the user plane function element or instance and being associated to one of the identifiers, each identifier corresponding to at least part of the functionality of the user plane function element or instance and being associated to one or more of the entities, and the entities associated to a same identifier belonging to a same entity set defining a set of entities which are functionally equivalent, interchangeable and sharing context data, and means for establishing multiple associations with the user plane function element or instance based on the obtained information, each association being associated with one identifier of said structure.

According to an example aspect of the present disclosure, there is provided an apparatus of (or, stated in other words, operable or for use in/by) a session management function element or instance in a mobile communication system, the apparatus comprising at least one processor and at least one memory including computer program code, wherein the processor, with the at least one memory and the computer program code, is configured to cause the apparatus to perform: obtaining information on a user plane function decomposition structure of a user plane function element or instance, said structure comprising multiple entities and multiple identifiers, each entity being dedicated to perform at least part of the functionality of the user plane function element or instance and being associated to one of the identifiers, each identifier corresponding to at least part of the functionality of the user plane function element or instance and being associated to one or more of the entities, and the entities associated to a same identifier belonging to a same entity set defining a set of entities which are functionally equivalent, interchangeable and sharing context data, and establishing multiple associations with the user plane function element or instance based on the obtained information, each association being associated with one identifier of said structure.

According to an example aspect of the present disclosure, there is provided a method of (or, stated in other words, operable or for use in/by) a session management function element or instance in a mobile communication system, comprising: obtaining information on a user plane function decomposition structure of a user plane function element or instance, said structure comprising multiple entities and multiple identifiers, each entity being dedicated to perform at least part of the functionality of the user plane function element or instance and being associated to one of the identifiers, each identifier corresponding to at least part of the functionality of the user plane function element or instance and being associated to one or more of the entities, and the entities associated to a same identifier belonging to a same entity set defining a set of entities which are functionally equivalent, interchangeable and sharing context data, and establishing multiple associations with the user plane function element or instance based on the obtained information, each association being associated with one identifier of said structure.

According to various developments/modifications, any one of the aforementioned method-related and/or apparatus-related example aspects of the present disclosure may include one or more of the following features:
the method, functionality or operability comprises discovering, in said structure, an entity having an address for controlling a service, session or traffic via the user plane function element or instance, by which the entity is addressable by the session management function element or instance, wherein one of the multiple associations can be, is or will be established relating to the discovered entity,
in the aforementioned discovering, a front-end entity for the entity is discovered, an address of the front-end entity being or corresponding to the address of its entity, by which the entity is addressable,
the information on the user plane function decomposition structure comprises an indication of the entities in said structure and properties of the individual entities,
the aforementioned properties comprise support characteristics of the individual entities, indicating one or more of supported network or traffic features, parameters or elements, per identity,
the method, functionality or operability comprises selecting, from an entity set, one entity for performing a transaction in controlling a service, session or traffic via the user plane function element or instance, and transferring, to the user plane function element or instance, a command, instruction or information for performing the transaction by using the selected entity,
the aforementioned selecting is performed in response to a trigger to select, from the entity set, one entity for performing the transaction in controlling the service, session or traffic from the user plane function element or instance,
the method, functionality or operability comprises discovering, in said structure, an entity set, said entity set having an address for controlling a service, session or traffic via the user plane function element or instance, by which the entity set is addressable by the session management function element or instance, wherein one of the multiple associations is or will be established relating to the discovered entity set,
in the aforementioned discovering, a front-end entity for the entity set is discovered, an address of the front-end entity being or corresponding to the address of its entity set, by which the entity set is addressable,
the information on the user plane function decomposition structure comprises an indication of the entity sets in said structure and properties of the individual entity sets,
the aforementioned properties comprise support characteristics of the individual entity sets, indicating one or more of supported network or traffic features, parameters or elements, per identity,
the method, functionality or operability comprises selecting an entity set for performing a transaction in controlling a service, session or traffic via the user plane function element or instance, and transferring, to the user plane function element or instance, a command, instruction or information for performing the transaction by using the selected entity set,
the obtaining comprises receiving the information on the user plane function decomposition structure from another element or instance, such as a network repository function element or instance and/or an operations, administration and maintenance element or function,
the obtaining comprises retrieving the information on the user plane function decomposition structure from another element or instance, such as a network repository function element or instance and/or an operations, administration and maintenance element or function, where the information is registered,
the obtaining comprises setting-up a configuration of the information on the user plane function decomposition structure,
each entity in said structure is or comprises a functional module for controlling a service, a session or traffic according to a predetermined protocol, such as a packet forwarding control protocol,
each entity and/or entity set is configured to support independent lifecycle management.

According to an example aspect of the present disclosure, there is provided an apparatus of (or, stated in other words, operable or for use in/by) a network repository function element or instance in a mobile communication system, comprising: means for obtaining information on a user plane function decomposition structure of a user plane function element or instance, said structure comprising multiple entities and multiple identifiers, each entity being dedicated to perform at least part of the functionality of the user plane function element or instance and being associated to one of the identifiers, each identifier corresponding to at least part of the functionality of the user plane function element or instance and being associated to one or more of the entities, and the entities associated to a same identifier belonging to a same entity set defining a set of entities which are functionally equivalent, interchangeable and sharing context data, and means for registering the obtained information for the user plane function element or instance.

According to an example aspect of the present disclosure, there is provided an apparatus of (or, stated in other words, operable or for use in/by) a network repository function element or instance in a mobile communication system, the apparatus comprising at least one processor and at least one memory including computer program code, wherein the processor, with the at least one memory and the computer program code, is configured to cause the apparatus to perform: obtaining information on a user plane function decomposition structure of a user plane function element or instance, said structure comprising multiple entities and multiple identifiers, each entity being dedicated to perform at least part of the functionality of the user plane function element or instance and being associated to one of the identifiers, each identifier corresponding to at least part of the functionality of the user plane function element or instance and being associated to one or more of the entities, and the entities associated to a same identifier belonging to a same entity set defining a set of entities which are functionally equivalent, interchangeable and sharing context data, and registering the obtained information for the user plane function element or instance.

According to an example aspect of the present disclosure, there is provided a method of (or, stated in other words, operable or for use in/by) a network repository function element or instance in a mobile communication system, comprising: obtaining information on a user plane function decomposition structure of a user plane function element or instance, said structure comprising multiple entities and multiple identifiers, each entity being dedicated to perform at least part of the functionality of the user plane function element or instance and being associated to one of the identifiers, each identifier corresponding to at least part of the functionality of the user plane function element or instance and being associated to one or more of the entities, and the entities associated to a same identifier belonging to a same entity set defining a set of entities which are functionally equivalent, interchangeable and sharing context data, and registering the obtained information for the user plane function element or instance.

According to various developments/modifications, any one of the aforementioned method-related and/or apparatus-related example aspects of the present disclosure may include one or more of the following features:
the information on the user plane function decomposition structure comprises information on an entity having an address for controlling a service, session or traffic via the user plane function element or instance, by which the entity is addressable by another network element or instance, such as a session management function element or instance,
the aforementioned information on the user plane function decomposition structure comprises information on a front-end entity for each entity, the address of any entity being or corresponding to an address of its front-end entity, by which the entity is addressable,
the aforementioned information on the user plane function decomposition structure comprises an indication of the entities in said structure and properties of the individual entities,
the aforementioned properties comprise support characteristics of the individual entities, indicating one or more of supported network or traffic features, parameters or elements, per identity,
the aforementioned information on the user plane function decomposition structure is such that all of the entities of said structure are exposed to and discoverable by another network element or instance, such as a session management function element or instance,
the information on the user plane function decomposition structure comprises information on an entity set, said entity set having an address for controlling a service, session or traffic via the user plane function element or instance, by which the entity set is addressable by another network element or instance, such as a session management function element or instance,
the aforementioned information on the user plane function decomposition structure comprises information on a front-end entity for each entity set, the address of any entity set being or corresponding to an address of its front-end entity, by which the entity set is addressable,
the aforementioned information on the user plane function decomposition structure comprises an indication of the entity sets in said structure and properties of the individual entity sets,
the aforementioned properties comprise support characteristics of the individual entity sets, indicating one or more of supported network or traffic features, parameters or elements, per identity,
the aforementioned information on the user plane function decomposition structure is such that all of entity sets of said structure are exposed to and discoverable by another network element or instance, such as a session management function element or instance,
the obtaining comprises receiving the information on the user plane function decomposition structure from the user plane function element or instance,
each entity in said structure is or comprises a functional module for controlling a service, a session or traffic according to a predetermined protocol, such as a packet forwarding control protocol,
each entity and/or entity set is configured to support independent lifecycle management.

According to an example aspect of the present disclosure, there is provided a computer program product comprising (computer-executable) computer program code which, when the program code is executed (or run) on a computer or the program is run on a computer (e.g. a computer of an apparatus according to any one of the aforementioned apparatus-related example aspects of the present disclosure), is configured to cause the computer to carry out the method according to any one of the aforementioned method-related example aspect of the present disclosure, respectively.

The computer program product may comprise or may be embodied as a (tangible/non-transitory) computer-readable (storage) medium or the like, on which the computer-executable computer program code is stored, and/or the program is directly loadable into an internal memory of the computer or a processor thereof.

According to an example aspect of the present disclosure, there is provided data structure or format (which may be a computer-implemented data structure or format, which may be embodied on a medium or as an electromagnetic carrier wave), comprising an information element defining information on a user plane function decomposition structure for decomposing a functionality of a user plane function element or instance in a mobile communication system, said structure comprising multiple entities and multiple identifiers, each entity being dedicated to perform at least part of the functionality of the user plane function element or instance and being associated to by one of the identifiers, each identifier corresponding to at least part of the functionality of the user plane function element or instance and associated to one or more of the entities, and the entities associated to a same identifier belonging to a same entity set defining a set of entities which are functionally equivalent, interchangeable and sharing context data.

According to various developments/modifications, the aforementioned data structure/format-related example aspect of the present disclosure may include one or more of the following features:
the information element comprising (a mapping of) objects corresponding to the multiple entities in said structure, each object comprising at least an identity of its entity and the identifier of its entity,
the information element comprising (a mapping of) objects corresponding to the entity sets in said structure, each object comprising at least an identity of its entity set and the identifier of its entity set.

Further developments and/or modifications of the aforementioned exemplary aspects of the present disclosure are set out in the following.

By way of exemplifying embodiments of the present disclosure, a technique for (enabling/realizing) a User Plane Function (UPF) decomposition in a mobile communication system can be enabled/realized. In other words, a technique for an effective UPF realization/configuration in terms of its decomposition and/or modularization can be enabled/realized, thus e.g. enabling to expose its decomposed modules or functional entities (i.e. the thus achievable features or functionalities) and/or make its decomposed modules or functional entities (i.e. the thus achievable features or functionalities) discoverable.

### Brief description of the drawings

In the following, the present disclosure will be described in greater detail by way of non-limiting examples with reference to the accompanying drawings, in which
Figure 1 shows a flowchart illustrating an example of a method or process according to at least one exemplifying embodiment,
Figure 2 shows a flowchart illustrating an example of a method or process according to at least one exemplifying embodiment,
Figure 3 shows a flowchart illustrating an example of a method or process according to at least one exemplifying embodiment,
Figure 4 shows a sequence diagram illustrating an example of a procedure of UPF, NRF and SMF elements/instances according to at least one exemplifying embodiment,
Figure 5 shows a schematic diagram of an example of a functional configuration of UPF and SMF elements/instances according to at least one exemplifying embodiment,
Figure 6 shows a schematic diagram of an example of a functional configuration of UPF and SMF elements/instances according to at least one exemplifying embodiment,
Figure 7 shows a schematic block diagram illustrating an example of a structure of apparatuses according to at least one exemplifying embodiment, and
Figure 8 shows a schematic block diagram illustrating an example of a structure of an apparatuses according to at least one exemplifying embodiment.

### Detailed description

The present disclosure is described herein with reference to particular non-limiting examples and to what are presently considered to be conceivable (examples of) embodiments. A person skilled in the art will appreciate that the present disclosure is by no means limited to these examples and embodiments, and may be more broadly applied.

It is to be noted that the following description mainly refers to specifications being used as non-limiting examples for certain exemplifying network configurations and system deployments. Namely, the following description mainly refers to 3GPP standards, being used as non-limiting examples. As such, the description of exemplifying embodiments given herein specifically refers to terminology which is directly related thereto. Such terminology is only used in the context of the presented non-limiting examples and embodiments, and does naturally not limit the present disclosure in any way. Rather, any other system configuration or deployment may equally be utilized as long as complying with what is described herein and/or exemplifying embodiments described herein are applicable to it.

For examples, the present disclosure is equally applicable in any (mobile/wireless) communication system, such as 5G/NR systems and next generation systems beyond 5G.

Hereinafter, various exemplifying embodiments and implementations of the present disclosure and its aspects are described using several variants and/or alternatives. It is generally to be noted that, according to certain needs and constraints, all of the described variants and/or alternatives may be provided alone or in any conceivable combination (also including combinations of individual features of the various variants and/or alternatives). In this description, the words "comprising" and "including" should be understood as not limiting the described exemplifying embodiments and implementations to consist of only those features that have been mentioned, and such exemplifying embodiments and implementations may also contain features, structures, units, modules etc. that have not been specifically mentioned.

In the drawings, it is to be noted that lines/arrows interconnecting individual blocks or entities are generally meant to illustrate an operational coupling there-between, which may be a physical and/or logical coupling, which on the one hand is implementation-independent (e.g. wired or wireless) and on the other hand may also comprise an arbitrary number of intermediary functional blocks or entities not shown. In flowcharts or sequence diagrams, the illustrated order of operations or actions is generally illustrative/exemplifying, and any other order of respective operations or actions is equally conceivable, if feasible.

According to exemplifying embodiments of the present disclosure, in general terms, there are provided measures/mechanisms for enabling/realizing a User Plane Function (UPF) decomposition in a mobile communication system. In other words, there is provided a technique for an effective UPF realization/configuration in terms of its decomposition and/or modularization, thus e.g. enabling to expose its decomposed modules or functional entities (i.e. the thus achievable features or functionalities) and/or make its decomposed modules or functional entities (i.e. the thus achievable features or functionalities) discoverable.

It is to be noted that herein the term "element" for denoting an entity, node, etc. in a communication system shall equally encompass both physical and virtual elements/realizations (depending on an implementation thereof), respectively. As a non-limiting example, a UPF and a NRF could be realized as physical elements or entities, while a SMF might be realized as a virtual element or entity.

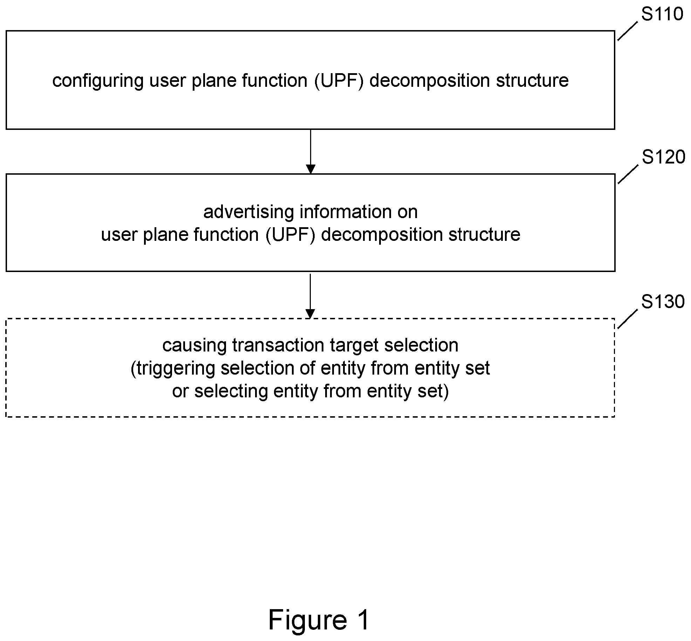

Figure 1 shows a flowchart illustrating an example of a method or process according to at least one exemplifying embodiment. The method or process of Figure 1 is a method or process of (or, stated in other words, operable or for use in/by) a user plane function element or instance, or an element, function or entity of similar/comparable functionality or operability, in a mobile communication system, such as a UPF in a 3GPP network or system. The method or process of Figure 1 may be performed at/by the user plane function element or instance, such as the UPF, in a periodic, triggered or event-based manner.

As shown in Figure 1, the method or process comprises an operation (S110) of configuring a user plane function (UPF) decomposition structure for decomposing a functionality of the UPF, and an operation (S120) of advertising information on the user plane function (UPF) decomposition structure. Such information may also be referred to as a profile of/for the user plane function (UPF) decomposition structure, and/or may be included in, encompassed by or related to such a profile, and/or may be realized or reflected by some specific data structure or format (e.g. as explained below).

According to at least one exemplifying embodiment, the user plane function (UPF) decomposition structure comprises multiple entities and multiple identifiers, wherein each entity is dedicated to (perform) at least part of the functionality of the UPF and is associated to (or, stated in other words, accompanied by) one of the identifiers. Each identifier corresponds to at least part of the functionality of the UPF and is associated to (or, stated in other words, accompanies) one or more of the entities, and the (all) entities associated to (or, stated in other words, accompanied by) a same identifier belong to a same entity set defining a set of entities which are functionally equivalent, interchangeable and sharing context data.

According to at least one exemplifying embodiment, the user plane function (UPF) decomposition structure is based on individual entities, and advertising of the related information or profile enables/facilitates exposure and discoverability of these individual entities. In this regard, each entity may have an address for controlling (or handling) a service, session or traffic via the UPF, by which the entity is addressable by another network element or instance, such as a session management function (SMF) element or instance. Optionally, the structure may further comprise a front-end entity for each entity, wherein the address of any entity is or corresponds to an address of its front-end entity, by which the entity is addressable.

In such case, the related information or profile may comprise an indication of the entities in the structure and properties of the individual entities, wherein the properties may comprise support characteristics of the individual entities, indicating one or more of supported network or traffic features, parameters or elements, per identity.

According to at least one exemplifying embodiment, the user plane function (UPF) decomposition structure is based on individual entity sets, and advertising of the related information or profile enables/facilitates exposure and discoverability of these individual entity sets. In this regard, each entity set may have an address for controlling (or handling) a service, session or traffic via the UPF, by which the entity set is addressable by another network element or instance, such as a session management function (SMF) element or instance. Optionally, the structure may further comprise a front-end entity for each entity set, wherein the address of any entity set is or corresponds to an address of its front-end entity, by which the entity set is addressable.

In such case, the related information or profile may comprise an indication of the entity sets in the structure and properties of the individual entity sets, wherein the properties may comprise support characteristics of the individual entity sets, indicating one or more of supported network or traffic features, parameters or elements, per identity.

As shown in Figure 1, the method or process may further comprise an operation (S130) of causing a transaction target selection, i.e. causing that an entity or entity set is selected as a transaction target, namely for performing a transaction in controlling (or handling) a service, session or traffic via the user plane function element or instance. This operation may comprise triggering another network element or instance, such as a session management function (SMF) element or instance, to select, from an entity set, one entity for performing the transaction, or selecting, from an entity set, one entity for performing the transaction.

According to at least one exemplifying embodiment, the advertising may comprise transferring the information or profile to at least one other element or instance, such as a network repository function (NRF) element or instance and/or an operations, administration and maintenance (OAM) element or instance, and/or initiating configuration of the information or profile in at least one other element or instance, such as a network repository function (NRF) element or instance and/or an operations, administration and maintenance (OAM) element or instance and/or a session management function (SMF) element or instance.

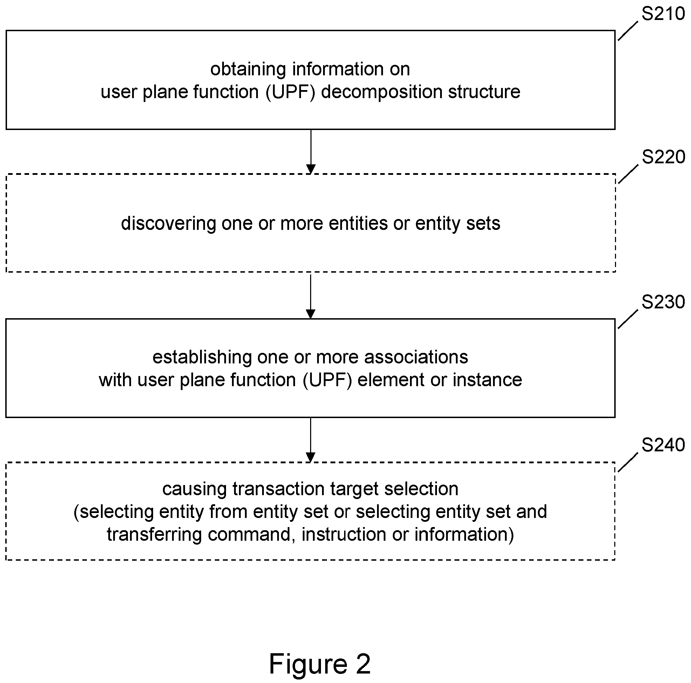

Figure 2 shows a flowchart illustrating an example of a method or process according to at least one exemplifying embodiment. The method or process of Figure 2 is a method or process of (or, stated in other words, operable or for use in/by) a session management function element or instance, or an element, function or entity of similar/comparable functionality or operability, in a mobile communication system, such as a SMF in a 3GPP network or system. The method or process of Figure 2 may be performed at/by the session management function element or instance, such as the SMF, in a periodic, triggered or event-based manner.

As shown in Figure 2, the method or process comprises an operation (S210) of obtaining information on a user plane function (UPF) decomposition structure of a UPF (such as the UPF performing the method or process of Figure 1), and an operation (S230) of establishing multiple associations with the UPF based on the obtained information, each association being associated with one identifier of the user plane function (UPF) decomposition structure. Such information may also be referred to as a profile of/for the user plane function (UPF) decomposition structure, and/or may be included in, encompassed by or related to such a profile, and/or may be realized or reflected by some specific data structure or format (e.g. as explained below).

According to at least one exemplifying embodiment, the user plane function (UPF) decomposition structure and the related information or profile are the same as described above in connection with Figure 1, and thus reference is made to the description of Figure 1 for the sake of convenience.

As shown in Figure 2, the method or process may further comprise an operation (S220) discovering, in the user plane function (UPF) decomposition structure, one or more entities and/or one or more entity sets, which may be accomplished based on the obtained related information or profile.

According to at least one exemplifying embodiment, when the user plane function (UPF) decomposition structure is based on individual entities, the discovering may comprise discovering an entity having an address for controlling or (handling) a service, session or traffic via the user plane function element or instance, by which the entity is addressable by the SMF. If so, one of the multiple associations may be established relating to the discovered entity. Optionally, a front-end entity for the entity may be discovered, wherein an address of the front-end entity is or corresponds to the address of its entity, by which the entity is addressable.

According to at least one exemplifying embodiment, when the user plane function (UPF) decomposition structure is based on individual entity sets, the discovering may comprise discovering an entity set, wherein the entity set has an address for controlling (or handling) a service, session or traffic via the user plane function element or instance, by which the entity set is addressable by the SMF. If so, one of the multiple associations may be established relating to the discovered entity set. Optionally, a front-end entity for the entity set may be discovered, wherein an address of the front-end entity is or corresponds to the address of its entity set, by which the entity set is addressable.

As shown in Figure 2, the method or process may further comprise an operation (S240) of causing a transaction target selection, i.e. causing that an entity or entity set is selected as a transaction target, namely for performing a transaction in controlling (or handling) a service, session or traffic via the user plane function element or instance. This operation may comprise selecting, from an entity set, one entity for performing the transaction and transferring, to the UPF, a command, instruction or information for performing the transaction by using the selected entity, or selecting an entity set for performing the transaction and transferring, to the UPF, a command, instruction or information for performing the transaction by using the selected entity set.

According to at least one exemplifying embodiment, the obtaining may comprise receiving the information or profile from another element or instance, such as a network repository function (NRF) element or instance and/or an operations, administration and maintenance (OAM) element or function, and/or retrieving the information or profile from another element or instance, such as a network repository function (NRF) element or instance and/or an operations, administration and maintenance (OAM) element or function, where the information is registered, and/or setting-up a configuration of the information or profile.

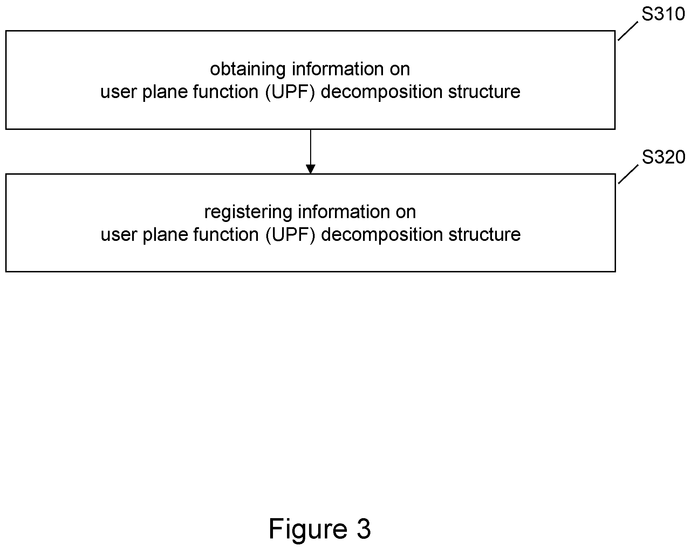

Figure 3 shows a flowchart illustrating an example of a method or process according to at least one exemplifying embodiment. The method or process of Figure 3 is a method or process of (or, stated in other words, operable or for use in/by) a network repository function element or instance, or an element, function or entity of similar/comparable functionality or operability, in a mobile communication system, such as a NRF in a 3GPP network or system. The method or process of Figure 3 may be performed at/by the network repository function element or instance, such as the NRF, in a periodic, triggered or event-based manner.

As shown in Figure 3, the method or process comprises an operation (S310) of obtaining information on a user plane function (UPF) decomposition structure of a UPF (such as the UPF performing the method or process of Figure 1), and an operation (S320) of registering the obtained information for the UPF. Such information may also be referred to as a profile of/for the user plane function (UPF) decomposition structure, and/or may be included in, encompassed by or related to such a profile, and/or may be realized or reflected by some specific data structure or format (e.g. as explained below).

According to at least one exemplifying embodiment, the user plane function (UPF) decomposition structure and the related information or profile are the same as described above in connection with Figure 1, and thus reference is made to the description of Figure 1 for the sake of convenience.

According to at least one exemplifying embodiment, when the user plane function (UPF) decomposition structure is based on individual entities, the information or profile may comprise information on an entity having an address for controlling (or handling) a service, session or traffic via the UPF, by which the entity is addressable by another network element or instance, such as a session management function (SMF) element or instance. Optionally, the information or profile may comprise information on a front-end entity for each entity, wherein the address of any entity is or corresponds to an address of its front-end entity, by which the entity is addressable.

According to at least one exemplifying embodiment, when the user plane function (UPF) decomposition structure is based on individual entity sets, the information or profile may comprise information on an entity set, wherein the entity set has an address for controlling (or handling) a service, session or traffic via the UPF, by which the entity set is addressable by another network element or instance, such as a session management function (SMF) element or instance. Optionally, the information or profile may comprise information on a front-end entity for each entity set, wherein the address of any entity set is or corresponds to an address of its front-end entity, by which the entity set is addressable.

According to at least one exemplifying embodiment, the obtaining may comprise receiving the information or profile from the UPF (such as the UPF performing the method or process of Figure 1).

In the following, various exemplifying embodiments are described with regard to more specific examples which, however, are merely illustrative and not limiting. In this regard, a (part of a) mobile/wireless communication system comprising at least one UPF element or instance, denoted as UPF, at least one SMF element or instance, denoted as SMF, and optionally at least one NRF element or instance, denoted as NRF, is exemplarily assumed as a basis, and PFCP is assumed as an applicable packet forwarding and/or control protocol for (performing) any UPF functionality/feature, i.e. handling and/or controlling a transaction in controlling (or handling) a service, session or traffic via the UPF.

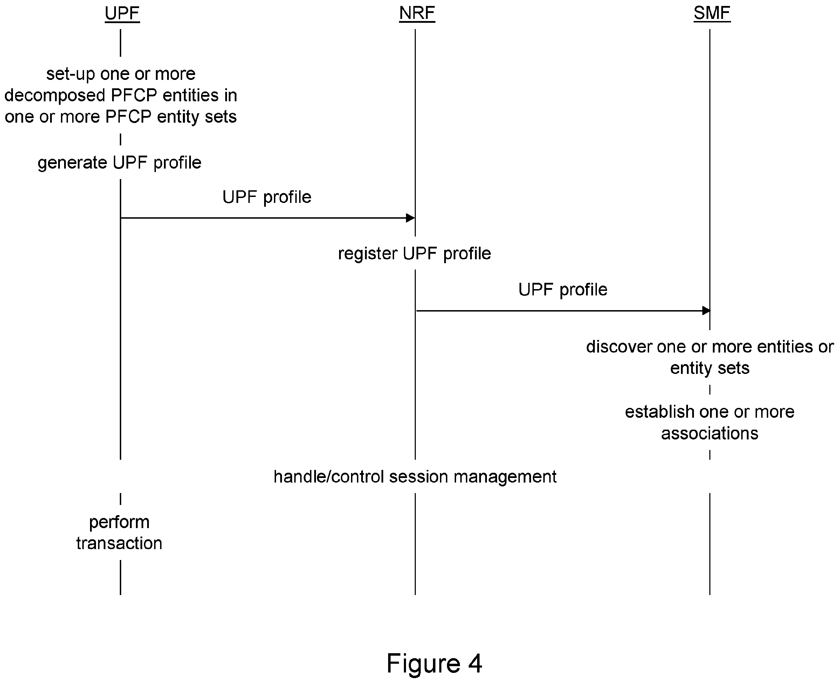

Figure 4 shows a sequence diagram illustrating an example of a procedure of UPF, NRF and SMF elements/instances according to at least one exemplifying embodiment.

As shown in Figure 4, the UPF sets up (or, stated in other words, establishes or produces) one or more PFCP entities, as decomposed PFCP entities, which might be dedicated to (perform) any UPF functionality/feature, respectively. Each of the thus set-up PFCP entities is associated to (or, stated in other words, accompanied by) an identifier which is hereinafter exemplarily referred to as Node ID, wherein each of the Node IDs corresponds to a corresponding UPF functionality/feature, thus being dedicated to the corresponding UPF functionality/feature. Each Node ID may be associated to (or, stated in other words, accompany) one or more PFCP entities, i.e. a number of PFCP entities being dedicated to (perform) the same corresponding UPF functionality/feature. All PFCP entities associated to (or, stated in other words, accompanied by) the same Node ID form, define or belong to the same PFCP entity set, i.e. a set of PFCP entities being dedicated to (perform) the same corresponding UPF functionality/feature.

Accordingly, the PFCP entities belonging to the same PFCP entity set (i.e. being associated to or accompanied by the same Node ID) are functionally equivalent, interchangeable and sharing context data (or, stated in other words, supporting context persistency), i.e. any PFCP entity of one PFCP entity set may be re-/selected (e.g. during an ongoing service, session or traffic via the UPF) to perform a transaction according to the same corresponding UPF functionality/feature. Each of the PFCP entities and/or each of the PFCP entity sets may be configured to support independent life-cycle management (LCM). For example, during the lifecycle of a PFCP session, the PFCP entity handling it might change (e.g. due to a failure) and another PFCP entity within the same PFCP entity set (i.e. being associated to or accompanied by the same Node ID) can take over, without changing UP tunnels endpoints. Thus, enhanced resiliency and dynamic load rebalancing could be achieved.

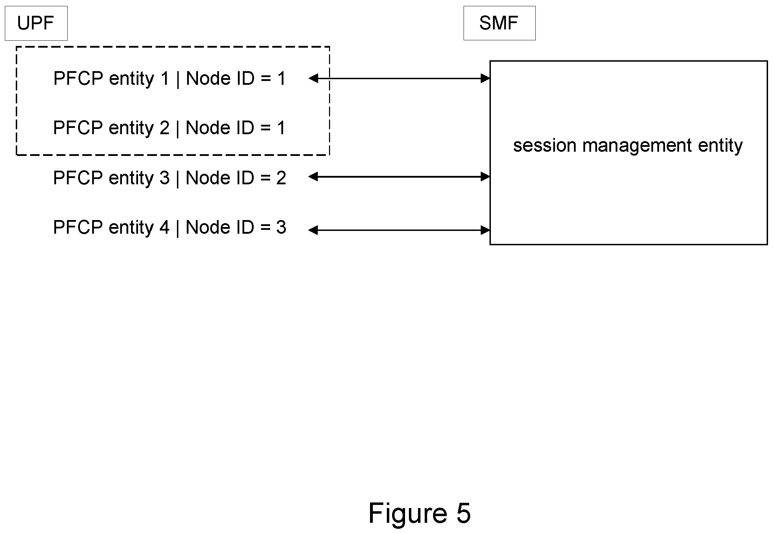

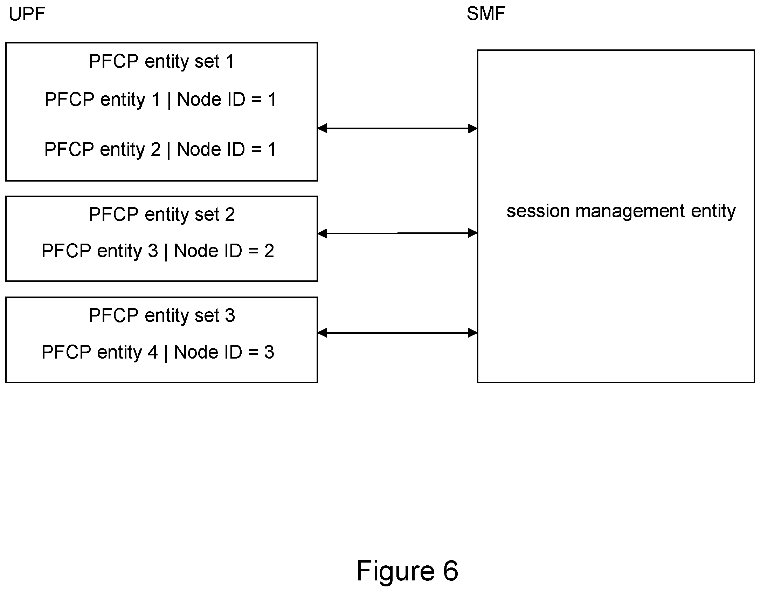

Thereby, a UPF decomposition structure is configured at/by the UPF, and the UPF may advertise (information on) the thus configured UPF decomposition structure. For further details of examples of resulting UPF decomposition structures, as well as corresponding UPF profiles (e.g. standing for PFCP entity and/or PFCP entity set data structures or formats within a UPF profile), reference is made to Figures 5 and 6 and their associated descriptions.

Accordingly, the UPF supports a UPF decomposition structure, and is configured/enables to expose its UPF decomposition structure (including the PFCP entities and/or the PFCP entity sets) so as to make the PFCP entities and/or the PFCP entity sets (i.e. the decomposed modules) discoverable by other functions, elements or instances in the system (which obtain or are configured with/by the related UPF profile).

As shown in Figure 4, the UPF generates a UPF profile which indicates (information on) the thus configured UPF decomposition structure, and the UPF transfers the thus generated UPF profile to the NRF, at/by which the thus advertised UPF profile is registered.

As shown in Figure 4, the SMF (which represents an element or function being in control of (selecting) the UPF and its UPF functionalities/features) obtains the UPF profile from the NRF, e.g. by retrieving the UPF profile from the NRF registering the same. Based thereon, the SMF performs discovery on/of the UPF decomposition structure being indicated by the thus retrieved UPF profile. Namely, depending on the configuration/arrangement and properties of the UPF decomposition structure and the related UPF profile, the SMF may discover one or more PFCP entities of the UPF (e.g. in case of the UPF decomposition structure illustrated in Figure 5) or may discover one or more PFCP entity sets of the UPF (e.g. in case of the UPF decomposition structure illustrated in Figure 6). Then, the SMF establishes one or more associations with decomposed modules of the UPF based on the discovery result, wherein one association may be established per Node ID, i.e. for each UPF functionality/feature. Namely, the SMF may establish associations with respective PFCP entities (e.g. in case of the UPF decomposition structure illustrated in Figure 5) or may establish associations with respective PFCP entity sets (e.g. in case of the UPF decomposition structure illustrated in Figure 6).

Accordingly, by way of the exposure by the UPF, the SMF is configured/enabled to discover the UPF's UPF decomposition structure (including the PFCP entities and/or the PFCP entity sets), i.e. the decomposed modules which are made discoverable with/by the related UPF profile.

As shown in Figure 4, session management is handled/controlled among the UPF and the SMF, via the thus established associations between the UPF's decomposed modules and the SMF, e.g. its session management entity.

As an example, e.g. applicable in case of the UPF decomposition structure illustrated in Figure 5, the UPF may trigger the SMF to select a PFCP entity from a PFCP entity set for performing a PFCP session transaction. Such request/trigger of transaction target selection may be caused based on a corresponding command, instruction or information for re-/selection of a PFCP entity in a PFCP entity set from another function, element or instance in the system, such as e.g. the SMF, and/or in response to a command, instruction or information for change of a PFCP entity in a PFCP entity set from a PFCP entity in the PFCP entity set or a control entity of the UPF. For example, a failure or deficiency of the PFCP entity currently performing a specific transaction is detected either externally or internally with respect to the UPF, and the external or internal means detecting such failure or deficiency initiates re-/selection of another PFCP entity within the same PFCP entity set accordingly so as to ensure that the specific transaction is kept performing. In response to such request/trigger of transaction target selection from the UPF, the SMF may cause an appropriate transaction target selection based on the previously obtained UPF profile (which enables discovery of individual PFCP entities within PFCP entity sets of the UPF). Namely, the SMF may select a PFCP entity, different from the PFCP entity currently performing the specific transaction, in the same PFCP entity set, and may transfer a corresponding re-/selection command, instruction or information to the UPF, i.e. a command, instruction or information for performing the specific transaction by using the re-/selected PFCP entity.

In this example, a PFCP entity might advertise that it wants to become un-sticky and hence trigger the SMF to select another PFCP entity in the same PFCP entity set, i.e. another PFCP entity with the same Node ID. The SMF is enabled to select another PFCP entity in the same PFCP entity set, as the individual PFCP entities are exposed to and thus discoverable for/by the SMF. Thus, the SMF may (externally) handle/control which PFCP entity is allocated to each transaction of an ongoing PFCP session. That is, the SMF may change the PFCP entity handling/controlling e.g. a PFCP session during the lifecycle of the PFCP session, e.g. due to failure or load re-balancing.

As another example, e.g. applicable in case of the UPF decomposition structure illustrated in Figure 6, the SMF may cause a transaction target selection based on the previously obtained UPF profile (which enables discovery of individual PFCP entity sets of the UPF). Namely, the SMF may select a PFCP entity set, as a PFCP entity set (including a PFCP entity) for performing a specific transaction, and may transfer a corresponding selection command, instruction or information to the UPF, i.e. a command, instruction or information for performing the specific transaction by using the selected PFCP entity set. Optionally, the SMF might also request reselection of a PFCP entity within the same PFCP entity set, i.e. the currently selected PFCP entity set, and may transfer a corresponding command, instruction or information to the UPF, i.e. a command, instruction or information for performing the specific transaction by using (some other PFCP entity within) the selected PFCP entity set. In response to such command, instruction or information from the SMF, the UPF may cause an appropriate transaction target selection based on its UPF decomposition structure. Namely, the UPF may select another PFCP entity from the selected PFCP entity set according to the command, instruction or information from the SMF, i.e. a command, instruction or information for performing the specific transaction by using the selected PFCP entity set (or, optionally, another PFCP entity within the selected PFCP entity set). Additionally or alternatively, the UPF may select another PFCP entity within the selected PFCP entity set in response to a command, instruction or information for change of a PFCP entity within a PFCP entity set from a PFCP entity in the PFCP entity set or a control entity of the UPF. Namely, a failure or deficiency of the PFCP entity, i.e. within the PFCP entity set, currently performing the specific transaction is detected either externally or internally with respect to the UPF, and the external or internal means detecting such failure or deficiency initiates re-/selection of another PFCP entity within the current/selected PFCP entity set accordingly so as to ensure that the specific transaction is kept performing.

In this example, the individual PFCP entities are not exposed to and thus discoverable for/by the SMF, but only the individual PFCP entity sets such that their constituent PFCP entities are hidden from the SMF. Hence, the UPF is enabled to select a/another PFCP entity in the PFCP entity set selected by the SMF. Thus, the UPF may (internally) handle/control which PFCP entity is allocated to each transaction of an ongoing PFCP session. Such internal selection of a PFCP entity in a specific PFCP entity set may be realized by a front-end entity for/of the specific PFCP entity set, i.e. the front-end entity may change the PFCP entity handling/controlling e.g. a PFCP session during the lifecycle of the PFCP session, e.g. due to failure or load re-balancing.

As shown in Figure 4, a transaction of the PFCP session is performed, i.e. a transaction in controlling (or handling) a service, session or traffic via the UPF is performed, at/by the UPF based on the preceding handling/control of session management.

In view of the above, it is evident that one or more of the following applies according to at least one exemplifying embodiment:
The UPF is enabled to support a decomposition structure, including multiple PFCP entities and multiple Node IDs. Hence, the UPF is allowed/enabled to support multiple PFCP entities/Node IDs, where each PFCP entity/Node ID might be supporting some (or all) of the UPF functionalities/features, independent of what functionalities/features are supported by other PFCP entities/Node IDs in the same UPF.
The SMF is enabled to establish or set up multiple associations with the UPF, i.e. a single UPF element or instance, one per Node ID. Hence, multiple PFCP associations between the SMF and the UPF, one per Node ID of the UPF, are allowed/enabled, if multiple Node IDs are supported by the UPF. Similarly, multiple PFCP associations are allowed/enabled between a set of SMFs and the UPF supporting multiple Node IDs
The UPF is enabled to advertise, per Node ID, its properties, such as supported characteristics, like supported functionalities/features, supported slices, supported NPNs, etc. What is supported by each PFCP entity and/or PFCP entity set can be gathered in information on the decomposition structure, such as a UPF profile, which may be advertised to the NRF or configured at the SMF.
Isolation/dedication of N4 traffic per Node ID, i.e. any UPF functionality/feature supported by a PFCP entity or PFCP entity set corresponding to the Node ID, is enabled. For example, a dedicated PFD management per slice would mean sending, on the association related with a Node ID, only the PFD information related with the slices this Node ID supports. Hence, the UPF is allowed/enabled to support multiple PFCP entities/Node IDs, in which case an N4 association applies per Node ID of the UPF.

Figure 5 shows a schematic diagram of an example of a functional configuration of UPF and SMF elements/instances according to at least one exemplifying embodiment.

As shown in Figure 5, the UPF may have, i.e. support, a UPF decomposition structure based on individual PFCP entities. Based thereon, the UPF is configured/enabled to advertise a corresponding UPF profile and, thereby, to expose its individual PFCP entities so as to make the individual PFCP entities discoverable by other functions, elements or instances in the system (which obtain or are configured with/by the UPF profile). Accordingly, the individual PFCP entities of each PFCP entity set (as indicated by a dashed box) are visible to/for the SMF.

In the exemplary structure of Figure 5, the UPF decomposition structure comprises four PFCP entities, wherein PFCP entities 1 and 2 have the same Node ID, i.e. Node ID = 1, so as to form, define or belong to one PFCP entity set, while PFCP entities 3 and 4 represent/constitute their own PFCP entity sets, respectively. In such case, by way of the corresponding UPF profile being advertised by the UPF, the SMF is enabled to discover the individual PFCP entities, i.e. PFCP entities 1 to 4, and to establish (multiple) associations (i.e. node-related procedures) with the UPF, one per Node ID. Thereupon, the SMF can establish session-related procedures (such as PFCP session establishment) with the individual PFCP entities. As is exemplified, it is assumed that the SMF has established associations (i.e. node-related procedures) with PFCP entity 1 (for the PFCP entity set with Node ID = 1), PFCP entity 3 and PFCP entity 4. Based thereon, a session-related procedure could be targeting any of PFCP entities 1, 2 and 3, irrespective of which PFCP entity was used for an association.

In such UPF decomposition structure, each PFCP entity has an address, e.g. an address for controlling (or handling) a service, session or traffic via the UPF, by which the PFCP entity is addressable by another network element or instance, such as the SMF.

Although not shown in Figure 5, such UPF decomposition structure may further comprise a front-end entity (or briefly front-end) for each PFCP entity. If so, the address of any PFCP entity is or corresponds to an address of its front-end entity, by which the PFCP entity is addressable. That is, a front-end entity may be correlated with each PFCP entity, and any communication, control, etc. of/for a PFCP entity may pass or be handled/controlled by its front-end entity. For example, the associations from/by the SMF may be established with or via these front-end entities of the individual entities, respectively.

Hereinafter, exemplary details of a UPF profile of/for a UPF decomposition structure based on individual PFCP entities, as exemplified in Figure 5, are given.

As explained above, a UPF can upload a UPF profile into a NRF to be used for discovering UPFs by an SMF. According to exemplifying embodiments, as presented herein, such UPF profile may be enhanced (with new structured data types and/or elements) to allow the registration and discovery of individual entities of a set of entities as decomposed UPF modules.

A UPF profile for registration and discovery of individual PFCP entities of a set of PFCP entities of a UPF (for exposing and making discoverable the individual PFCP entities) may be realized, by a data structure/element, as follows.

| **Attribute name** | **Data type** | **P** | **Cardinality** | **Description** |
|---|---|---|---|---|
| PFCPEntityList | Map(PFCPEn tity) | O | 1..N | Map of PFCP entities, where the "PFCPEntityld" attribute of a new "PFCP Entity" object shall be used as the key of the map. |
| | | | | It shall include the PFCP entities produced and exposed by the UPF that can be discovered by an SMF. |

A data structure/element ("PFCPEntityList") of a UPF profile as above (or a data structure/element similar thereto) represents a data structure or format according to at least one exemplifying embodiment.

Therein, a PFCP entity ("PFCPEntity") is a new/specific object of/for a UPF decomposition structure based on individual PFCP entities, and may be defined, by a data structure/element, as follows:

| **Attribute name** | **Data type** | **P** | **Cardinality** | **Description** |
|---|---|---|---|---|
| PFCPEntityld | string | M | 1 | Unique ID of the PFCP entity within a given UPF Instance. |
| Versions | array(PFCPE ntityVersion) | M | 1..N | The PFCP versions supported by the PFCP entity. |
| PFCPEntityStatus | PFCPEntitySt atus | M | 1 | Status of the PFCP entity (NOTE 1). |
| Fqdn | Fqdn | O | 0..1 | FQDN of the PFCP entity. |
| | | | | The FQDN provided as part of the PFCP entity information has precedence over the FQDN and IP addresses provided as part of the NFProfile information (see 3GPP TS 29.510, clause 6.1.6.2.2). |
| ipEndPoints | array(IpEndP oint) | O | 1..N | IP address(es) of the PFCP entity (including IPv4 and/or IPv6 address) where it is listening for incoming requests (NOTE 2). IP addresses provided in ipEndPoints have precedence over IP addresses provided as part of the NFProfile information and, over FQDN provided as part of the NFProfile information (see 3GPP TS 29.510, clause 6.1.6.2.2). |
| plmnList | array(Plmnld) | C | 1..N | PLMN(s) of the PFCP entity. |
| | | | | This IE shall be present if this information is available for the PFCP entity. |
| | | | | If not provided, PLMN ID(s) of the UPF are assumed for the PFCP entity. |
| snpnList | array(Plmnld Nid) | C | 1..N | SNPN(s) of the PFCP entity. |
| | | | | This IE shall be present if the PFCP entity pertains to one or more SNPNs. |
| sNssais | array(ExtSnss ai) | O | 1..N | S-NSSAIs of the PFCP entity. This may be a subset of the S-NSSAIs supported by the NF (see sNssais attribute in NFProfile). |
| | | | | When present, this IE shall represent the list of S-NSSAls supported by the PFCP entity in all the PLMNs listed in the plmnList IE and it shall prevail over the list of S-NSSAls supported by the NF instance. |
| perPlmnSnssaiList | array(PlmnSn ssai) | O | 1..N | S-NSSAIs of the PFCP entity per PLMN. This may be a subset of the S-NSSAIs supported per PLMN by the NF (see perPlmnSnssaiList attribute in NFProfile). |
| | | | | This IE may be included when the list of S-NSSAls supported by the PFCP entity for each PLMN it is supporting is different. When present, this IE shall include the S-NSSAls supported by the PFCP entity for each PLMN and it shall prevail over the list of S-NSSAIs supported per PLMN by the NF instance. When present, this IE shall override the sNssais IE. |
| Priority | integer | O | 0..1 | Priority (relative to other PFCP entities in the same Node ID) in the range of 0-65535, to be used for PFCP entity selection; lower values indicate a higher priority (NOTE 3). |
| Capacity | integer | O | 0..1 | Static capacity information in the range of 0-65535, expressed as a weight relative to other PFCP entities in the same Node ID (NOTE 3). |
| Load | integer | O | 0..1 | Dynamic load information, ranged from 0 to 100, indicates the current load percentage of the PFCP entity. |
| loadTimeStamp | DateTime | O | 0..1 | It indicates the point in time in which the latest load information (sent by the NF in the "load" attribute of the PFCP entity) was generated at the PFCP entity. |
| | | | | If the NF did not provide a timestamp, the NRF should set it to the instant when the NRF received the message where the NF provided the latest load information. |
| recoveryTime | DateTime | O | 0..1 | Timestamp when the PFCP entity was (re)started (NOTE 1) (NOTE 4). |
| allowedPlmns | array(Plmnld) | O | 1..N | PLMNs allowed to access the PFCP entity (NOTE 5). |
| | | | | If this attribute is present in the PFCP entity and in the NF profile, the attribute from the PFCP entity shall prevail. |
| | | | | The absence of this attribute indicates that any PLMN is allowed to access the PFCP entity. |
| | | | | This attribute shall not be included in profile change notifications to subscribed NFs (NOTE 6). |
| allowedSnpns | array(Plmnld Nid) | O | 1..N | SNPNs allowed to access the PFCP entity. |
| | | | | If this attribute is present in the PFCP entity and in the NF profile, the attribute from the PFCP entity shall prevail. |
| | | | | The absence of this attribute in both the NFService and in the NF profile indicates that no SNPN, other than the SNPN(s) registered in the snpnList attribute of the NF Profile, is allowed to access the service instance. |
| | | | | This attribute shall not be included in profile change notifications to subscribed NFs (NOTE 6). |
| allowedNfDomains | array(string) | O | 1..N | Pattern (regular expression according to the ECMA-262 dialect [8]) representing the NF domain names within the PLMN of the NRF allowed to access the PFCP entity (NOTE 5). |
| | | | | The absence of this attribute indicates that any NF domain is allowed to access the PFCP entity. |
| | | | | This attribute shall not be included in profile change notifications to subscribed NFs (NOTE 6). |
| allowedNssais | array(ExtSnss ai) | O | 1..N | S-NSSAI of the allowed slices to access the PFCP entity (NOTE 5). |
| | | | | The absence of this attribute indicates that any slice is allowed to access the PFCP entity. |
| | | | | This attribute shall not be included in profile change notifications to subscribed NFs (NOTE 6). |
| NodelD (or PFCP Entity Set ID) | NodelD | M | 1 | The Node ID associated to the PFCP entity. |
| | | | | All the PFCP entities registering the same Node ID shall be considered as part of the same PFCP entities set, i.e. they share context data, are functionality equivaelent and interchangeable. |
| perPlmnNodeIDList | array(PlmnNo delD) | O | 1..N | When present, this IE shall represent the list of Node IDs supported by the PFCP entity in all the PLMNs listed in the plmnList IE. A single Node ID per PLMN/SNPN applies. |
| upflnfoList | map(Upflnfo) | O | 1..N | Multiple entries of Upflnfo. |
| | | | | If this attribute is present in the PFCP entity and in the NF profile, the attribute from the PFCP entity shall prevail. If this attribute is absent in the PFCP entity, but it is present in the NF Profile, the attribute from the NF Profile shall be applied. |
| | | | | The key of the map shall be a (unique) valid JSON string per clause 7 of IETF RFC 8259, with a maximum of 32 characters. |

For such definition, the following notes may apply:

| | |
|---|---|
| NOTE 1: | The NRF shall notify NFs subscribed to receiving notifications of changes of the NF profile, if the PFCPEntityStatus and/or recoveryTime is changed. |
| NOTE 2: | If multiple ipv4 addresses and/or ipv6 addresses are included in the PFCP entity, the consumer of the discovery service shall select one of these addresses randomly, unless operator defined local policy of IP address selection, in order to avoid overload for a specific ipv4 address and/or ipv6 address. |
| NOTE 3: | The capacity and priority parameters, if present, are used for selection and load balancing. The priority and capacity attributes shall be used for selection in the same way that priority and weight are used for server selection as defined in IETF RFC 2782. |
| NOTE 4: | A requester NF subscribed to NF status changes may consider that all the resources created in the PFCP entity before the PFCP entity recovery time have been lost. This may be used to detect a restart of a PFCP entity and to trigger appropriate actions, e.g. release local resources. |
| NOTE 5: | If this attribute is present in the PFCP entity and in the NF profile, the attribute from the PFCP entity shall prevail. The absence of this attribute in the PFCP entity and in |
| | the NFProfile indicates that there is no corresponding restriction to access the PFCP entity. If this attribute is absent in the PFCP entity, but it is present in the NF Profile, the attribute from the NF Profile shall be applied. |
| NOTE 6: | A change of this attribute shall trigger a "NF_PROFILE_CHANGED" notification from NRF, if the change of the NF Profile results in that the NF Instance starts or stops being authorized to be accessed by an NF having subscribed to be notified about NF profile changes. |

A data structure/element of the object "PFCPEntity" as above (or a data structure/element similar thereto) represents a data structure or format according to at least one exemplifying embodiment. One or more of the data structures/elements as below may be included in, encompassed by or related to such data structure or format according to at least one exemplifying embodiment.

In the above data structure/element, i.e. the "PFCPEntity" object, the attribute "PFCPEntityVersion" may be defined as follows:

| **Attribute name** | **Data type** | **P** | **Cardinality** | **Description** |
|---|---|---|---|---|
| PFCPEntityVersion | string | M | 1 | Version of the PFCP protocol (as specified in 3GPP TS 29.244) supported by the PFCP entity. |

In the above data structure/element, i.e. the "PFCPEntity" object, the enumeration "PFCPEntityStatus" may be defined as follows:

| **Enumeration value** | **Description** |
|---|---|
| "REGISTERED" | The PFCP entity is registered in NRF and can be discovered by other NFs. |
| "SUSPENDED" | The PFCP entity is registered in NRF but it is not operative and cannot be discovered by other NFs. This status may result from a PFCP entity failure and may trigger restoration procedures (see 3GPP TS 23.527, clause 6.2). |
| "UNDISCOVERABLE" | The PFCP entity is registered in NRF, is operative but cannot be discovered by other NFs. |
| | This status may be set by the NF e.g. in shutting down scenarios where the PFCP entity is still able to process requests for existing sessions but cannot accept new session establishment requests. |
| NOTE: An PFCP entity cannot be discovered by other NFs if the UPF status is set to "SUSPENDED" or "UNDISCOVERABLE", regardless of the PFCP entity status. | |

In the above data structure/element, i.e. the "PFCPEntity" object, the data type "NodeID" may be defined, as set out in clause 8.2.38 of 3GPP TS 29.244, V17.2.1 (2021-09).

In the above data structure/element, i.e. the "PFCPEntity" object, the data type "PlmnNodeID" may be defined as follows:

| **Attribute name** | **Data type** | **P** | **Cardinality** | **Description** |
|---|---|---|---|---|
| plmnId | Plmnld | M | 1 | PLMN ID for which a Node ID is provided. |
| NodelDList | array(NodeID) | M | 1..N | The specific list of Node IDs for the given PLMN or SNPN. A single Node ID per PLMN/SNPN applies. |
| nid | Nid | O | 0..1 | NID for which a Node ID is provided. |

In the above-outlined data structures/elements and definitions, the column P comprises "O" standing for Optional, "M" standing for Mandatory or "C" standing for Conditional, in order to indicate the necessity/property of the respective item. Further, "N" in the cardinality column indicates an integer equal to or larger than 1.

It is to be noted that the above-outlined data structures/elements and definitions are merely illustrative and not restrictive. In particular, it is to be noted that these data structures/elements and definitions contain example terms and provisions for illustration only, while other parameter names, etc. are also possible, and that one or more of the items in each data structure/element or definition are equally applicable, in any combination. Namely, any subset of one or more items of these data structures/elements and definitions, in at least a similar or basically equivalent form as given above, is applicable according to exemplifying embodiments.

Figure 6 shows a schematic diagram of an example of a functional configuration of UPF and SMF elements/instances according to at least one exemplifying embodiment.

As shown in Figure 6, the UPF may have, i.e. support, a UPF decomposition structure based on individual PFCP entity sets. Based thereon, the UPF is configured/enabled to advertise a corresponding UPF profile and, thereby, to expose its individual PFCP entity sets so as to make the individual PFCP entity sets discoverable by other functions, elements or instances in the system (which obtain or are configured with/by the UPF profile). Accordingly, the individual PFCP entity sets are visible to/for the SMF, and the PFCP entities as such (as indicated by a dashed box) are transparent for or hidden from the SMF.

In the exemplary structure of Figure 6, the UPF decomposition structure comprises three PFCP entity sets, wherein PFCP entity set 1 with Node ID = 1 comprises two PFCP entities, i.e. PFCP entities 1 and 2, while PFCP entity set 2 with Node ID = 2 and PFCP entity set 3 with Node ID = 3 comprise one PFCP entity, respectively. In such case, by way of the corresponding UPF profile being advertised by the UPF, the SMF is enabled to discover the individual PFCP entity sets, i.e. PFCP entity sets 1 to 3, and to establish (multiple) associations (i.e. node-related procedures) with the UPF, namely with the individual PFCP entity sets, one per Node ID. As is exemplified, it is assumed that the SMF has established associations (i.e. node-related procedures) with PFCP entity sets 1 to 3, respectively. Based thereon, a session-related procedure could be targeting any of PFCP entity sets 1, 2 and 3 (i.e. its PFCP entity sets), irrespective of which PFCP entity set was used for an association.

In such UPF decomposition structure, each PFCP entity set has an address, e.g. an address for controlling (or handling) a service, session or traffic via the UPF, by which the PFCP entity set is addressable by another network element or instance, such as the SMF.

Although not shown in Figure 6, such UPF decomposition structure may further comprise a front-end entity (or briefly front-end) for each PFCP entity set. If so, the address of any PFCP entity set is or corresponds to an address of its front-end entity, by which the PFCP entity set is addressable. That is, a front-end entity may be correlated with each PFCP entity set, and any communication, control, etc. of/for a PFCP entity set may pass or be handled/controlled by its front-end entity. For example, the associations from/by the SMF may be established with or via these front-end entities of the individual entity sets, respectively.

Hereinafter, exemplary details of a UPF profile of/for a UPF decomposition structure based on individual PFCP entities, as exemplified in Figure 6, are given.

As explained above, a UPF can upload a UPF profile into a NRF to be used for discovering UPFs by an SMF. According to exemplifying embodiments, as presented herein, such UPF profile may be enhanced (with new structured data types and/or elements) to allow the registration and discovery of individual entity sets as decomposed UPF modules.

A UPF profile for registration and discovery of individual PFCP entity sets, i.e. sets of one or more PFCP entities, of a UPF (for exposing and making discoverable the PFCP entity sets, without exposing and making discoverable the individual PFCP entities in each PFCP entity set) may be realized, by a data structure/element, as follows.

| | | | | |
|---|---|---|---|---|
| PFCPEntitySetList | Map(PFCPEntit ySet) | O | 1..N | Map of PFCP entities sets, where the "PFCPEntitySet" attribute shall be used as the key of the map. |
| | | | | It shall include the PFCP entities sets produced and exposed by the UPF that can be discovered by an SMF. |

A data structure/element ("PFCPEntitySetList") of a UPF profile as above (or a data structure/element similar thereto) represents a data structure or format according to at least one exemplifying embodiment.

Therein, a PFCP entity set ("PFCPEntitySet") is a new/specific object of/for a UPF decomposition structure based on individual PFCP entity sets, and may be defined, by a data structure/element, as follows:

| **Attribute name** | **Data type** | **P** | **Cardinality** | **Description** |
|---|---|---|---|---|
| PFCPEntitySetld | string | M | 1 | Unique ID of the PFCP entity set within a given UPF Instance. |
| | | | | Could be encoded as a Node ID. |
| Versions | array(PFCPEnti tyVersion) | M | 1..N | The PFCP versions supported by the PFCP entity set. |
| PFCPEntitySetStatus | PFCPEntitySet Status | M | 1 | Status of the PFCP entity set (NOTE 1). |
| Fqdn | Fqdn | O | 0..1 | FQDN of the PFCP entity set or front-end entity for the establishment of PFCP sessions. |
| ipEndPoints | array(IpEndPoi nt) | O | 1..N | IP address(es) of the PFCP entity set or front-end entity for the establishment of PFCP sessions |
| plmnList | array(Plmnld) | C | 1..N | PLMN(s) of the PFCP entity set. |
| | | | | This IE shall be present if this information is available for the PFCP entity set. |
| | | | | If not provided, PLMN ID(s) of the UPF are assumed for the PFCP entity set. |
| snpnList | array(PlmnIdNi d) | C | 1..N | SNPN(s) of the PFCP entity set. This IE shall be present if the PFCP entity set pertains to one or more SNPNs. |
| sNssais | array(ExtSnssai ) | O | 1..N | S-NSSAls of the PFCP entity set. This may be a subset of the S-NSSAIs supported by the NF (see sNssais attribute in NFProfile). |
| | | | | When present, this IE shall represent the list of S-NSSAls supported by the PFCP entity set in all the PLMNs listed in the plmnList IE and it shall prevail over the list of S-NSSAIs supported by the NF instance. |
| perPlmnSnssaiList | array(PlmnSns sai) | O | 1..N | S-NSSAls of the PFCP entity set per PLMN. This may be a subset of the S-NSSAIs supported per PLMN by the NF (see perPlmnSnssaiList attribute in NFProfile). |
| | | | | This IE may be included when the list of S-NSSAIs supported by the PFCP entity set for each PLMN it is supporting is different. When present, this IE shall include the S-NSSAIs supported by the PFCP entity set for each PLMN and it shall prevail over the list of S-NSSAls supported per PLMN by the NF instance. When present, this IE shall override the sNssais IE. |
| Priority | integer | O | 0..1 | Priority (relative to other PFCP entity sets) in the range of 0-65535, to be used for PFCP entity selection; lower values indicate a higher priority (NOTE 3). |
| Capacity | integer | O | 0..1 | Static capacity information in the range of 0-65535, expressed as a weight relative to other PFCP entity sets (NOTE 3). |
| Load | integer | O | 0..1 | Dynamic load information, ranged from 0 to 100, indicates the current load percentage of the PFCP entity set. |
| loadTimeStamp | DateTime | O | 0..1 | It indicates the point in time in which the latest load information (sent by the NF in the "load" attribute of the PFCP entity set) was generated at the PFCP entity set. |
| | | | | If the NF did not provide a timestamp, the NRF should set it to the instant when the NRF received the message where the NF provided the latest load information. |
| recoveryTime | DateTime | O | 0..1 | Timestamp when the PFCP entity set was (re)started (NOTE 1) (NOTE 4). |
| allowedPlmns | array(PlmnId) | O | 1..N | PLMNs allowed to access the PFCP entity set (NOTE 5). |
| | | | | If this attribute is present in the PFCP entity set and in the NF profile, the attribute from the PFCP entity set shall prevail. |
| | | | | The absence of this attribute indicates that any PLMN is allowed to access the PFCP entity set. |
| | | | | This attribute shall not be included in profile change notifications to subscribed NFs (NOTE 6). |
| allowedSnpns | array(PlmnIdNi d) | O | 1..N | SNPNs allowed to access the PFCP entity set. |
| | | | | If this attribute is present in the PFCP entity set and in the NF profile, the attribute from the PFCP entity set shall prevail. |
| | | | | The absence of this attribute in both the NFService and in the NF profile indicates that no SNPN, other than the SNPN(s) registered in the snpnList attribute of the NF Profile, is allowed to access the service instance. |
| | | | | This attribute shall not be included in profile change notifications to subscribed NFs (NOTE 6). |
| allowedNfDomains | array(string) | O | 1..N | Pattern (regular expression according to the ECMA-262 dialect [8]) representing the NF domain names within the PLMN of the NRF allowed to access the PFCP entity set (NOTE 5). |
| | | | | The absence of this attribute indicates that any NF domain is allowed to access the PFCP entity set. |
| | | | | This attribute shall not be included in profile change notifications to subscribed NFs (NOTE 6). |
| allowedNssais | array(ExtSnssai ) | O | 1..N | S-NSSAI of the allowed slices to access the PFCP entity set (NOTE 5). |
| | | | | The absence of this attribute indicates that any slice is allowed to access the PFCP entity set. |
| | | | | This attribute shall not be included in profile change notifications to subscribed NFs (NOTE 6). |
| NodelD | NodeID | M | 1 | The Node ID associated to the PFCP entity set. |
| | | | | All the PFCP entity sets registering the same Node ID shall be considered as part of the same PFCP entity set, i.e. they share context data, are functionality equivaelent and interchangeable. |
| perPlmnNodeIDList | array(PlmnNod eID) | O | 1..N | When present, this IE shall represent the list of Node IDs supported by the PFCP entity set in all the PLMNs listed in the plmnList IE. A single Node ID per PLMN/SNPN applies. |
| upfInfoList | map(UpfInfo) | O | 1..N | Multiple entries of Upflnfo. |
| | | | | If this attribute is present in the PFCP entity set and in the NF profile, the attribute from the PFCP entity set shall prevail. If this attribute is absent in the PFCP entity set, but it is present in the NF Profile, the attribute from the NF Profile shall be applied. |
| | | | | The key of the map shall be a (unique) valid JSON string per clause 7 of IETF RFC 8259, with a maximum of 32 characters. |

For such definition, the following notes may apply:

| | |
|---|---|
| NOTE 1: | The NRF shall notify NFs subscribed to receiving notifications of changes of the NF profile, if the PFCPEntitySetStatus and/or recoveryTime is changed. |
| NOTE 2: | If multiple ipv4 addresses and/or ipv6 addresses are included in the PFCP entity set, the consumer of the discovery service shall select one of these addresses randomly, unless operator defined local policy of IP address selection, in order to avoid overload for a specific ipv4 address and/or ipv6 address. |
| NOTE 3: | The capacity and priority parameters, if present, are used for selection and load balancing. The priority and capacity attributes shall be used for selection in the same way that priority and weight are used for server selection as defined in IETF RFC 2782. |
| NOTE 4: | A requester NF subscribed to NF status changes may consider that all the resources created in the PFCP entity set before the PFCP entity set recovery time have been lost. This may be used to detect a restart of a PFCP entity set and to trigger appropriate actions, e.g. release local resources. |
| NOTE 5: | If this attribute is present in the PFCP entity set and in the NF profile, the attribute from the PFCP entity set shall prevail. The absence of this attribute in the PFCP entity set and in the NFProfile indicates that there is no corresponding restriction to access the PFCP entity set. If this attribute is absent in the PFCP entity set, but it is present in the NF Profile, the attribute from the NF Profile shall be applied. |
| NOTE 6: | A change of this attribute shall trigger a "NF_PROFILE_CHANGED" notification from NRF, if the change of the NF Profile results in that the NF Instance starts or stops being authorized to be accessed by an NF having subscribed to be notified about NF profile changes. |

A data structure/element of the object "PFCPEntitySet" as above (or a data structure/element similar thereto) represents a data structure or format according to at least one exemplifying embodiment. One or more of the data structures/elements as below may be included in, encompassed by or related to such data structure or format according to at least one exemplifying embodiment.

In the above data structure/element, i.e. the "PFCPEntitySet" object, the attribute "PFCPEntitySetVersion" may be defined as follows:

| **Attribute name** | **Data type** | **P** | **Cardinality** | **Description** |
|---|---|---|---|---|
| PFCPEntitySetVersion | string | M | 1 | Version of the PFCP protocol (as specified in 3GPP TS 29.244) supported by the PFCP entity set. |

In the above data structure/element, i.e. the "PFCPEntitySet" object, the enumeration "PFCPEntitySetStatus" may be defined as follows:

| **Enumeration value** | **Description** |
|---|---|
| "REGISTERED" | The PFCP entity set is registered in NRF and can be discovered by other NFs. |
| "SUSPENDED" | The PFCP entity set is registered in NRF but it is not operative and cannot be discovered by other NFs. |
| | This status may result from a PFCP entity set failure and may trigger restoration procedures (see 3GPP TS 23.527, clause 6.2). |
| "UNDISCOVERABLE" | The PFCP entity set is registered in NRF, is operative but cannot be discovered by other NFs. |
| | This status may be set by the NF e.g. in shutting down scenarios where the PFCP entity set is still able to process requests for existing sessions but cannot accept new session establishment requests. |
| NOTE: An PFCP entity set cannot be discovered by other NFs if the UPF status is set to "SUSPENDED" or "UNDISCOVERABLE", regardless of the PFCP entity set status. | |

In the above data structure/element, i.e. the "PFCPEntitySet" object, the data type "NodeID" may be defined, as set out in clause 8.2.38 of 3GPP TS 29.244, V17.2.1 (2021-09).

In the above data structure/element, i.e. the "PFCPEntitySet" object, the data type "PlmnNodeID" may be defined as follows:

| **Attribute name** | **Data type** | **P** | **Cardinality** | **Description** |
|---|---|---|---|---|
| plmnId | PlmnId | M | 1 | PLMN ID for which a Node ID is provided. |
| NodeIDList | array(NodeID) | M | 1..N | The specific list of Node IDs for the given PLMN or SNPN. A single Node ID per PLMN/SNPN applies. |
| nid | Nid | O | 0..1 | NID for which a Node ID is provided. |

In the above-outlined data structures/elements and definitions, the column P comprises "O" standing for Optional, "M" standing for Mandatory or "C" standing for Conditional, in order to indicate the necessity/property of the respective item. Further, "N" in the cardinality column indicates an integer equal to or larger than 1.

It is to be noted that the above-outlined data structures/elements and definitions are merely illustrative and not restrictive. In particular, it is to be noted that these data structures/elements and definitions contain example terms and provisions for illustration only, while other parameter names, etc. are also possible, and that one or more of the items in each data structure/element or definition are equally applicable, in any combination. Namely, any subset of one or more items of these data structures/elements and definitions, in at least a similar or basically equivalent form as given above, is applicable according to exemplifying embodiments.

By virtue of exemplifying embodiments of the present disclosure, as evident from the above, there are provided measures/mechanisms for enabling/realizing a User Plane Function (UPF) decomposition in a mobile communication system can be enabled/realized. In other words, there is provided a technique for an effective UPF realization/configuration in terms of its decomposition and/or modularization, thus e.g. enabling to expose its decomposed modules or functional entities (i.e. the thus achievable features or functionalities) and/or make its decomposed modules or functional entities (i.e. the thus achievable features or functionalities) discoverable. Accordingly, decomposition and/or modularization of an UPF in terms of the exposure and discovery of its features or functionalities can be achieved and/or improved.

According to exemplifying embodiments, one or more of the following effects can thus be achieved.

A UPF decomposition can be defined so as to make it possible to expose the decomposed modules, i.e. the individual entities or entity sets, and/or make discoverable the decomposed modules, i.e. the individual entities or entity sets.

LCM (Life-Cycle Management) and LCM operations can be handled per decomposed modules, i.e. the entity or entity set. For example, with a decomposed approach where a UPF consists of 5 modules, when one of them is under overloaded, it is possible to scale only this module out.

A decomposed module, i.e. an entity or entity set, can be dedicated to any UPF functionality/feature. For example, such UPF functionality/feature may be one or more of UPF features advertised over Sx/N4, such as those listed in Table 8.2.25-1 of 3GPP TS 29.244, V17.2.1 (2021-09). For example, it is possible to advertise (and let an SMF choose) two (or more) UPF modules where module 1 supports the "TRST" feature (Traffic Steering) and module 2 supports the "ETHAR" feature (Ethernet PDU Session Anchor Relocation).

N4 traffic of different UPF modules can be fully isolated/dedicated. For example, it is possible to realize node-related procedures referring to more than one UPF instance. Likewise, all PFCP session establishment requests can be sent to the different UPFs' IP address(es), so e.g. with means to isolate such traffic for PDU sessions of different network slices.

The above-described functionality as well as its related operations, procedures, methods and processes may be implemented by respective functional elements, entities, modules, units, processors, or the like, as described below. These functional elements, entities, modules, units, processors, or the like, i.e. the implementation of one or more exemplifying embodiments, may be realized in a cloud environment, by SDN, by NFV/NFVI, or the like.

While in the foregoing exemplifying embodiments of the present disclosure are described mainly with reference to operations, procedures, methods and processes, corresponding exemplifying embodiments of the present disclosure also cover respective apparatuses, entities, modules, units, network nodes and/or systems, including software and/or hardware thereof.

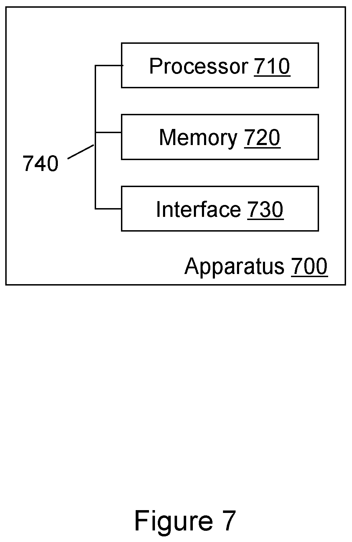

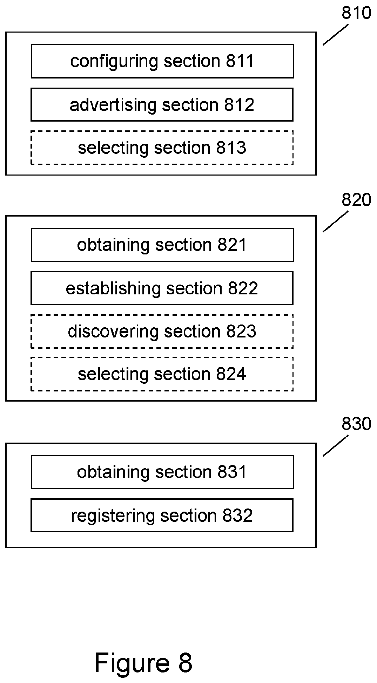

Respective exemplifying embodiments of the present invention are described below referring to Figures 7 and 8, while for the sake of brevity reference is made to the detailed description of respective corresponding configurations/setups, schemes, processes, sequences, methods as well as functionalities, principles and operations according to Figures 1 to 6.

In Figures 6 and 7, the blocks are basically configured to perform respective methods, procedures and/or functions as described above. The entirety of blocks are basically configured to perform the methods, procedures and/or functions as described above, respectively. With respect to Figures 6 and 7, it is to be noted that the individual blocks are meant to illustrate respective functional blocks implementing a respective function, process or procedure, respectively. Such functional blocks are implementation-independent, i.e. may be implemented by means of any kind of hardware or software or combination thereof, respectively.

Further, in Figures 6 and 7, only those functional blocks are illustrated, which relate to any one of the above-described methods, procedures and/or functions. A skilled person will acknowledge the presence of any other conventional functional blocks required for an operation of respective structural arrangements, such as e.g. a power supply, a central processing unit, respective memories or the like. Among others, one or more memories are provided for storing programs or program instructions for controlling or enabling the individual functional entities or any combination thereof to operate as described herein in relation to exemplifying embodiments.

Figure 7 shows a schematic diagram illustrating an example of a structure of apparatuses according to at least one exemplifying embodiment. Herein, an apparatus can represent a physical entity or component, i.e. a structural device implementing a specific network element, entity or function or the functionality thereof as such, or a functional or logical entity or component. For example, the thus illustrated apparatus may be realized in or by a server or the like in a cloud environment, i.e. by a cloud-based implementation.

As indicated in Figure 7, according to at least one exemplifying embodiment, an apparatus 700 may comprise or realize at least one processor 710 and at least one memory 720 (and possibly also at least one interface 730), which may be operationally connected or coupled, for example by a bus 740 or the like, respectively.

The processor 710 and/or the interface 730 of the apparatus 700 may also include a modem or the like to facilitate communication over a (hardwire or wireless) link, respectively. The interface 730 of the apparatus 700 may include a suitable transmitter, receiver or transceiver connected or coupled to one or more antennas, antenna units, such as antenna arrays or communication facilities or means for (hardwire or wireless) communications with the linked, coupled or connected device(s), respectively. The interface 730 of the apparatus 700 is generally configured to communicate with at least one other apparatus, device, node or entity (in particular, the interface thereof).

The memory 720 of the apparatus 700 may represent a (non-transitory/tangible) storage medium (e.g. RAM, ROM, EPROM, EEPROM, etc.) and store respective software, programs, program products, macros or applets, etc. or parts of them, which may be assumed to comprise program instructions or computer program code that, when executed by the respective processor, enables the respective electronic device or apparatus to operate in accordance with the exemplifying embodiments of the present invention. Further, the memory 720 of the apparatus 700 may (comprise a database to) store any data, information, or the like, which is used in the operation of the apparatus.

In general terms, respective apparatuses (and/or parts thereof) may represent means for performing respective operations and/or exhibiting respective functionalities, and/or the respective devices (and/or parts thereof) may have functions for performing respective operations and/or exhibiting respective functionalities.

In view of the above, the thus illustrated apparatus 700 is suitable for use in practicing one or more of the exemplifying embodiments, as described herein.

When in the subsequent description it is stated that the processor (or some other means) is configured to perform some function, this is to be construed to be equivalent to a description stating that a (i.e. at least one) processor or corresponding circuitry, potentially in cooperation with a computer program code stored in the memory of the respective apparatus or otherwise available (it should be appreciated that the memory may also be an external memory or provided/realized by a cloud service or the like), is configured to cause the apparatus to perform at least the thus mentioned function. It should be appreciated that herein processors, or more generally processing portions, should not be only considered to represent physical portions of one or more processors, but may also be considered as a logical division of the referred processing tasks performed by one or more processors.

According to at least one exemplifying embodiment, the thus illustrated apparatus 700 may represent or realize/embody a (part of a) user plane function element or instance, or an element, function or entity of similar/comparable functionality or operability, in a mobile communication system, such as a UPF in a 3GPP network or system. Hence, the apparatus 700 may be configured to perform a procedure and/or exhibit a functionality and/or implement a mechanism, as described (for a UPF) in any one of Figures 1 and 4 to 6.

Accordingly, the apparatus 700 may be caused or the apparatus 700 or its at least one processor 710 (possibly together with computer program code stored in its at least one memory 720), in its most basic form, is configured to configure a user plane function decomposition structure for decomposing a functionality of the user plane function element or instance, said structure comprising multiple entities and multiple identifiers, each entity being dedicated to perform at least part of the functionality of the user plane function element or instance and being associated to one of the identifiers, each identifier corresponding to at least part of the functionality of the user plane function element or instance and being associated to or more of the entities, and the entities associated to a same identifier belonging to a same entity set defining a set of entities which are functionally equivalent, interchangeable and sharing context data, and to advertise information on the user plane function decomposition structure.

According to at least one exemplifying embodiment, the thus illustrated apparatus 700 may represent or realize/embody a (part of a) session management function element or instance, or an element, function or entity of similar/comparable functionality or operability, in a mobile communication system, such as a SMF in a 3GPP network or system. Hence, the apparatus 700 may be configured to perform a procedure and/or exhibit a functionality and/or implement a mechanism, as described (for a SMF) in any one of Figures 2 and 4 to 6.

Accordingly, the apparatus 700 may be caused or the apparatus 700 or its at least one processor 710 (possibly together with computer program code stored in its at least one memory 720), in its most basic form, is configured to obtain information on a user plane function decomposition structure of a user plane function element or instance, said structure comprising multiple entities and multiple identifiers, each entity being dedicated to perform at least part of the functionality of the user plane function element or instance and being associated to one of the identifiers, each identifier corresponding to at least part of the functionality of the user plane function element or instance and being associated to one or more of the entities, and the entities associated to a same identifier belonging to a same entity set defining a set of entities which are functionally equivalent, interchangeable and sharing context data, and establish multiple associations with the user plane function element or instance based on the obtained information, each association being associated with one identifier of said structure.

According to at least one exemplifying embodiment, the thus illustrated apparatus 700 may represent or realize/embody a (part of a) network repository function element or instance, or an element, function or entity of similar/comparable functionality or operability, in a mobile communication system, such as a NRF in a 3GPP network or system. Hence, the apparatus 700 may be configured to perform a procedure and/or exhibit a functionality and/or implement a mechanism, as described (for a NRF) in any one of Figures 3 and 4 to 6.

Accordingly, the apparatus 700 may be caused or the apparatus 700 or its at least one processor 710 (possibly together with computer program code stored in its at least one memory 720), in its most basic form, is configured to obtain information on a user plane function decomposition structure of a user plane function element or instance, said structure comprising multiple entities and multiple identifiers, each entity being dedicated to perform at least part of the functionality of the user plane function element or instance and being associated to one of the identifiers, each identifier corresponding to at least part of the functionality of the user plane function element or instance and being associated to one or more of the entities, and the entities associated to a same identifier belonging to a same entity set defining a set of entities which are functionally equivalent, interchangeable and sharing context data, and to register the obtained information for the user plane function element or instance.

As mentioned above, an apparatus according to at least one exemplifying embodiment may be structured by comprising respective units or means for performing corresponding operations, procedures and/or functions. For example, such units or means may be implemented/realized on the basis of an apparatus structure, as exemplified in Figure 7, i.e. by one or more processors 710, one or more memories 720, one or more interfaces 730, or any combination thereof.

Figure 8 shows a schematic diagram illustrating an example of a structure of apparatuses according to at least one exemplifying embodiment.

As shown in Figure 8, an apparatus 810 according to at least one exemplifying embodiment may represent or realize/embody a (part of a) user plane function element or instance, or an element, function or entity of similar/comparable functionality or operability, in a mobile communication system, such as a UPF in a 3GPP network or system. Hence, the apparatus 810 may be configured to perform a procedure and/or exhibit a functionality and/or implement a mechanism, as described (for a UPF) in any one of Figures 1 and 4 to 6.

Such apparatus 810 may comprise (at least) one or more unit/means/circuitry, denoted by configuring section 811, which represent any implementation for (or configured to) configuring (configure) a user plane function decomposition structure for decomposing a functionality of the user plane function element or instance, said structure comprising multiple entities and multiple identifiers, each entity being dedicated to perform at least part of the functionality of the user plane function element or instance and being associated to one of the identifiers, each identifier corresponding to at least part of the functionality of the user plane function element or instance and being associated to or more of the entities, and the entities associated to a same identifier belonging to a same entity set defining a set of entities which are functionally equivalent, interchangeable and sharing context data, and one or more unit/means/circuitry, denoted by advertising section 812, which represent any implementation for (or configured to) advertising (advertise) information on the user plane function decomposition structure.

Further, such apparatus 810 may additionally/optionally further comprise one or more unit/means/circuitry, denoted by selecting section 813, which represent any implementation for (or configured to) triggering (trigger) another network element or function to select, from an entity set, one entity for performing a transaction in controlling a service, session or traffic via the user plane function element or instance, or selecting (select), from an entity set, one entity for performing a transaction in controlling a service, session or traffic via the user plane function element or instance. Such selection section 813 may further be for (or configured to) detecting and/or acquiring (detect and/or acquire) a failure or deficiency (or the like) of an entity and/or an entity set in/of the structure.

As shown in Figure 8, an apparatus 820 according to at least one exemplifying embodiment may represent or realize/embody a (part of a) session management function element or instance, or an element, function or entity of similar/comparable functionality or operability, in a mobile communication system, such as a SMF in a 3GPP network or system. Hence, the apparatus 820 may be configured to perform a procedure and/or exhibit a functionality and/or implement a mechanism, as described (for a SMF) in any one of Figures 2 and 4 to 6.

Such apparatus 820 may comprise (at least) one or more unit/means/circuitry, denoted by obtaining section 821, which represent any implementation for (or configured to) obtaining (obtain) information on a user plane function decomposition structure of a user plane function element or instance, said structure comprising multiple entities and multiple identifiers, each entity being dedicated to perform at least part of the functionality of the user plane function element or instance and being associated to one of the identifiers, each identifier corresponding to at least part of the functionality of the user plane function element or instance and being associated to one or more of the entities, and the entities associated to a same identifier belonging to a same entity set defining a set of entities which are functionally equivalent, interchangeable and sharing context data, and one or more unit/means/circuitry, denoted by establishing section 822, which represent any implementation for (or configured to) establishing (establish) multiple associations with the user plane function element or instance based on the obtained information, each association being associated with one identifier of said structure.

Further, such apparatus 820 may additionally/optionally further comprise one or more of
one or more unit/means/circuitry, denoted by discovering section 823, which represent any implementation for (or configured to) discovering (discover), in the structure, an entity having an address for controlling a service, session or traffic via the user plane function element or instance, by which the entity is addressable by the session management function element or instance (wherein one of the multiple associations can be established relating to the discovered entity), or discovering (discover), in the structure, an entity set, said entity set having an address for controlling a service, session or traffic via the user plane function element or instance, by which the entity set is addressable by the session management function element or instance (wherein one of the multiple associations can be established relating to the discovered entity set), and
one or more unit/means/circuitry, denoted by selecting section 824, which represent any implementation for (or configured to) selecting (select), from an entity set, one entity for performing a transaction in controlling a service, session or traffic via the user plane function element or instance (and transferring, to the user plane function element or instance, a command, instruction or information for performing the transaction by using the selected entity), or selecting (select) an entity set for performing a transaction in controlling a service, session or traffic via the user plane function element or instance (and transferring, to the user plane function element or instance, a command, instruction or information for performing the transaction by using the selected entity set). Such selection section 824 may further be for (or configured to) detecting and/or acquiring (detect and/or acquire) a failure or deficiency (or the like) of an entity and/or an entity set in/of the structure.

As shown in Figure 8, an apparatus 830 according to at least one exemplifying embodiment may represent or realize/embody a (part of a) network repository function element or instance, or an element, function or entity of similar/comparable functionality or operability, in a mobile communication system, such as a NRF in a 3GPP network or system. Hence, the apparatus 820 may be configured to perform a procedure and/or exhibit a functionality and/or implement a mechanism, as described (for a NRF) in any one of Figures 3 and 4 to 6.

Such apparatus 830 may comprise (at least) one or more unit/means/circuitry, denoted by obtaining section 831, which represent any implementation for (or configured to) obtaining (obtain) information on a user plane function decomposition structure of a user plane function element or instance, said structure comprising multiple entities and multiple identifiers, each entity being dedicated to perform at least part of the functionality of the user plane function element or instance and being associated to one of the identifiers, each identifier corresponding to at least part of the functionality of the user plane function element or instance and being associated to one or more of the entities, and the entities associated to a same identifier belonging to a same entity set defining a set of entities which are functionally equivalent, interchangeable and sharing context data, and one or more unit/means/circuitry, denoted by registering section 832, which represent any implementation for (or configured to) registering (register) the obtained information for the user plane function element or instance.

For further details regarding the operability/functionality of the apparatuses (or units/means thereof) according to exemplifying embodiments, reference is made to the above description in connection with any one of Figures 1 to 5, respectively.

According to exemplifying embodiments of the present disclosure, any one of the (at least one) processor, the (at least one) memory and the (at least one) interface, as well as any one of the illustrated units/means, may be implemented as individual modules, chips, chipsets, circuitries or the like, or one or more of them can be implemented as a common module, chip, chipset, circuitry or the like, respectively.

According to exemplifying embodiments of the present disclosure, a system may comprise any conceivable combination of any depicted or described apparatuses and other network elements or functional entities, which are configured to cooperate as described above.

In general, it is to be noted that respective functional blocks or elements according to above-described aspects can be implemented by any known means, either in hardware and/or software, respectively, if it is only adapted to perform the described functions of the respective parts. The mentioned method steps can be realized in individual functional blocks or by individual devices, or one or more of the method steps can be realized in a single functional block or by a single device.

Generally, a basic system architecture of a (tele)communication network including a mobile communication system where some examples of exemplifying embodiments are applicable may include an architecture of one or more communication networks including wireless access network sub-/system(s) and possibly core network(s). Such an architecture may include one or more communication network control elements or functions, such as e.g. access network elements, radio access network elements, access service network gateways or base transceiver stations, like a base station, an access point, a NodeB (NB), an eNB or a gNB, a distributed or a centralized unit, which controls a respective coverage area or cell(s) and with which one or more communication stations such as communication elements or functions, like user devices or terminal devices, like a UE, or another device having a similar function, such as a modem chipset, a chip, a module etc., which can also be part of a station, an element, a function or an application capable of conducting a communication, such as a UE, an element or function usable in a machine-to-machine communication architecture, or attached as a separate element to such an element, function or application capable of conducting a communication, or the like, are capable to communicate via one or more channels via one or more communication beams for transmitting several types of data in a plurality of access domains. Furthermore, core network elements or network functions, such as gateway network elements/functions, mobility management entities, a mobile switching center, servers, databases and the like may be included.

The general functions and interconnections of the described elements and functions, which also depend on the actual network type, are known to those skilled in the art and described in corresponding specifications, so that a detailed description thereof is omitted herein. It should be appreciated that several additional network elements and signaling links may be employed for a communication to or from an element, function or application, like a communication endpoint, a communication network control element, such as a server, a gateway, a radio network controller, and other elements of the same or other communication networks besides those described in detail herein below.

A communication network architecture as being considered in examples of exemplifying embodiments may also be able to communicate with other networks, such as a public switched telephone network or the Internet, including the Internet-of-Things. The communication network may also be able to support the usage of cloud services for virtual network elements or functions thereof, wherein it is to be noted that the virtual network part of the (tele)communication network can also be provided by non-cloud resources, e.g. an internal network or the like. It should be appreciated that network elements of an access system, of a core network etc., and/or respective functionalities may be implemented by using any node, host, server, access node or entity etc. being suitable for such a usage. Generally, a network function can be implemented either as a network element on a dedicated hardware, as a software instance running on a dedicated hardware, or as a virtualized function instantiated on an appropriate platform, e.g. a cloud infrastructure.

Any method step is suitable to be implemented as software or by hardware without changing the idea of the present disclosure. Such software may be software code independent and can be specified using any known or future developed programming language, such as e.g. Java, C++, C, and Assembler, as long as the functionality defined by the method steps is preserved. Such hardware may be hardware type independent and can be implemented using any known or future developed hardware technology or any hybrids of these, such as MOS (Metal Oxide Semiconductor), CMOS (Complementary MOS), BiMOS (Bipolar MOS), BiCMOS (Bipolar CMOS), ECL (Emitter Coupled Logic), TTL (Transistor-Transistor Logic), etc., using for example ASIC (Application Specific IC (Integrated Circuit)) components, FPGA (Field-programmable Gate Arrays) components, CPLD (Complex Programmable Logic Device) components or DSP (Digital Signal Processor) components. A device/apparatus may be represented by a semiconductor chip, a chipset, or a (hardware) module comprising such chip or chipset; this, however, does not exclude the possibility that a functionality of a device/apparatus or module, instead of being hardware implemented, be implemented as software in a (software) module such as a computer program or a computer program product comprising executable software code portions for execution/being run on a processor. A device may be regarded as a device/apparatus or as an assembly of more than one device/apparatus, whether functionally in cooperation with each other or functionally independently of each other but in a same device housing, for example.

Apparatuses and/or units/means or parts thereof can be implemented as individual devices, but this does not exclude that they may be implemented in a distributed fashion throughout the system, as long as the functionality of the device is preserved. Such and similar principles are to be considered as known to a skilled person.

Software in the sense of the present description comprises software code as such comprising code means or portions or a computer program or a computer program product for performing the respective functions, as well as software (or a computer program or a computer program product) embodied on a tangible medium such as a computer-readable (storage) medium having stored thereon a respective data structure or code means/portions or embodied in a signal or in a chip, potentially during processing thereof.

The present disclosure also covers any conceivable combination of method steps and operations described above, and any conceivable combination of nodes, apparatuses, modules or elements described above, as long as the above-described concepts of methodology and structural arrangement are applicable.

In view of the above, there are provided measures for enabling/realizing a User Plane Function (UPF) decomposition in a mobile communication system. Such measures exemplarily comprise that a user plane function (UPF) element or instance in a mobile communication system configures a user plane function decomposition structure for decomposing a functionality of the user plane function element or instance, and advertises information on the user plane function decomposition structure (such as a profile). The structure comprising multiple entities and multiple identifiers, wherein each entity is dedicated to perform at least part of the functionality of the user plane function element or instance and is associated to one of the identifiers, and the entities associated to a same identifier belong to a same entity set defining a set of entities which may be functionally equivalent, interchangeable and sharing context data.

Even though the present disclosure is described above with reference to the examples according to the accompanying drawings, it is to be understood that the present disclosure is not restricted thereto. Rather, it is apparent to those skilled in the art that the claimed embodiments can be modified in many ways without departing from the scope of the inventive idea as defined by the appended claims.

### List of acronyms and abbreviations

- 3GPP: 3rd Generation Partnership Project
- 5G: 5^{th} Generation
- 5GC: 5G Core
- AF: Application Function
- AMF: Access and Mobility Management Function
- CP: Control Plane
- DC: Data Centre
- DNN: Data Network Name
- ECMA: European Computer Manufacturers Association
- FQDN: Fully Qualified Domain Name
- ID: Identifier
- IE: Information Element
- IETF (RFC): Internet Engineering Task Force (Request For Comments)
- IP: Internet Protocol
- JSON: JavaScript Object Notation
- LCM: Life-Cycle Management
- NEF: Network Exposure Function
- NID: Network Identifier
- NF: Network Function
- NFV: Network Functions Virtualisation
- NFVI: Network Functions Virtualisation Infrastructure
- NPN: Non-Public Network
- NR: New Radio
- NRF: Network (Function) Repository Function
- NWDAF: Network Data Analytics Function
- PCF: Policy Control Function
- PDU: Protocol Data Unit
- PFCP: Packet Forwarding Control Protocol
- PLMN: Public Land Mobile Network
- QoS: Quality of Service
- SBA: Service Based Architecture
- SCP: Service Control Function
- SDN: Software-Defined Networking
- SMF: Session Management Function
- SNPN: Stand-alone Non-Public Network
- (S-)NSSAI: (Single) Network Slice Selection Assistance Information
- UE: User Equipment
- UPF: User Plane Function

## Claims

1. An apparatus of a user plane function element or instance in a mobile communication system, comprising:
means for configuring (810) a user plane function decomposition structure for decomposing a functionality of the user plane function element or instance, the user plane function decomposition structure comprising multiple entities and multiple identifiers, each entity of the multiple entities being dedicated to perform at least part of the functionality of the user plane function element or instance and being associated to a respective one of the multiple identifiers, each identifier of the multiple identifiers corresponding to at least part of the functionality of the user plane function element or instance and being associated to one or more entities of the multiple entities, and wherein respective entities of the multiple entities associated to a same identifier of the multiple identifiers belong to a same entity set defining a set of entities which are functionally equivalent, interchangeable and share context data, and
means for advertising (820) information on the user plane function decomposition structure.

2. The apparatus according to claim 1, wherein
in the user plane function decomposition structure, each entity has an address for controlling a service, session or traffic via the user plane function element or instance, by which the entity is addressable by another network element or instance, such as a session management function element or instance, and/or
the information on the user plane function decomposition structure comprises an indication of the entities in the user plane function decomposition structure and properties of the individual entities of the user plane function decomposition structure.

3. The apparatus according to claim 2, further comprising:
triggering another network element or instance, such as a session management function element or instance, to select, from an entity set, one entity for performing a transaction in controlling a service, session or traffic via the user plane function element or instance.

4. The apparatus according to claim 1, wherein
in the user plane function decomposition structure, each entity set has an address for controlling a service, session or traffic via the user plane function element or instance, by which the entity set is addressable by another network element or instance, such as a session management function element or instance, and/or
the information on the user plane function decomposition structure comprises an indication of the entity sets in the user plane function decomposition structure and properties of the individual entity sets of the user plane function decomposition structure.

5. The apparatus according to claim 4, further comprising:
means for selecting, from an entity set, one entity for performing a transaction in controlling a service, session or traffic via the user plane function element or instance.

6. An apparatus of a session management function element or instance in a mobile communication system, comprising:
means for obtaining (821) information on a user plane function decomposition structure of a user plane function element or instance, the user plane function decomposition structure comprising multiple entities and multiple identifiers, each entity of the multiple entities being dedicated to perform at least part of the functionality of the user plane function element or instance and being associated to a respective one of the multiple identifiers, each identifier of the multiple identifiers corresponding to at least part of the functionality of the user plane function element or instance and being associated to one or more entities of the multiple entities, and wherein respective entities of the multiple entities associated to a same identifier of the multiple identifiers belong to a same entity set defining a set of entities which are functionally equivalent, interchangeable and share context data, and
means for establishing (822) multiple associations with the user plane function element or instance based on the information, each association of the multiple associations being associated with one identifier of the multiple identifiers of the user plane function decomposition structure.

7. The apparatus according to claim 6, further comprising:
means for discovering, in the user plane function decomposition structure, an entity having an address for controlling a service, session or traffic via the user plane function element or instance, by which the entity is addressable by the session management function element or instance,
wherein the means for establishing is configured to establish one of the multiple associations relating to the entity that is discovered by the means for discovering.

8. The apparatus according to claim 7, further comprising:
means for selecting, from an entity set, one entity for performing a transaction in controlling a service, session or traffic via the user plane function element or instance, and
means for transferring, to the user plane function element or instance, a command, instruction or information for performing the transaction by using the one entity that is selected by the means for selecting.

9. The apparatus according to claim 6, further comprising:
means for discovering, in the user plane function decomposition structure, an entity set, said entity set having an address for controlling a service, session or traffic via the user plane function element or instance, by which the entity set is addressable by the session management function element or instance,
wherein the means for establishing is configured to establish one of the multiple associations relating to the entity set that is discovered by the means for discovering.

10. The apparatus according to claim 9, further comprising:
means for selecting an entity set for performing a transaction in controlling a service, session or traffic via the user plane function element or instance, and
means for transferring, to the user plane function element or instance, a command, instruction or information for performing the transaction by using the entity set that is selected by the means for selecting.

11. An apparatus of a network repository function element or instance in a mobile communication system, comprising:
means for obtaining (831) information on a user plane function decomposition structure of a user plane function element or instance, the user plane function decomposition structure comprising multiple entities and multiple identifiers, each entity of the multiple entities being dedicated to perform at least part of the functionality of the user plane function element or instance and being associated to a respective one of the multiple identifiers, each identifier of the multiple identifier corresponding to at least part of the functionality of the user plane function element or instance and being associated to one or more entities of the multiple entities, and wherein respective entities of the multiple entities associated to a same identifier belong to a same entity set defining a set of entities which are functionally equivalent, interchangeable and share context data, and
means for registering (832) the information for the user plane function element or instance.

12. A method of a user plane function element or instance in a mobile communication system, comprising:
configuring (S110) a user plane function decomposition structure for decomposing a functionality of the user plane function element or instance, user plane function decomposition structure comprising multiple entities and multiple identifiers, each entity of the multiple entities being dedicated to perform at least part of the functionality of the user plane function element or instance and being associated to a respective one of the multiple identifiers, each identifier of the multiple identifiers corresponding to at least part of the functionality of the user plane function element or instance and being associated to one or more entities of the multiple entities, and wherein respective entities of the multiple entities associated to a same identifier belong to a same entity set defining a set of entities which are functionally equivalent, interchangeable and share context data, and
advertising (S120) information on the user plane function decomposition structure.

13. A method of a session management function element or instance in a mobile communication system, comprising:
obtaining (S210) information on a user plane function decomposition structure of a user plane function element or instance, the user plane function decomposition structure comprising multiple entities and multiple identifiers, each entity of the multiple entities being dedicated to perform at least part of the functionality of the user plane function element or instance and being associated to a respective one of the multiple identifiers, each identifier of the multiple identifiers corresponding to at least part of the functionality of the user plane function element or instance and being associated to one or more entities of the multiple entities, and wherein respective entities of the multiple entities associated to a same identifier belong to a same entity set defining a set of entities which are functionally equivalent, interchangeable and share context data, and
establishing (S220) multiple associations with the user plane function element or instance based on the information, each association of the multiple associations being associated with one identifier of the multiple identifiers of the user plane function decomposition structure.

14. A method of a network repository function element or instance in a mobile communication system, comprising:
obtaining (S310) information on a user plane function decomposition structure of a user plane function element or instance, the user plane function decomposition structure comprising multiple entities and multiple identifiers, each entity of the multiple entities being dedicated to perform at least part of the functionality of the user plane function element or instance and being associated to a respective one of the multiple identifiers, each identifier of the multiple identifiers corresponding to at least part of the functionality of the user plane function element or instance and being associated to one or more entities of the multiple entities, and wherein respective entities of the multiple entities associated to a same identifier belong to a same entity set defining a set of entities which are functionally equivalent, interchangeable and share context data, and
registering (S320) the information for the user plane function element or instance.

15. A computer-implemented data structure or format, embodied on a medium or as an electromagnetic carrier wave, comprising instructions which, when run on a processor of a network function, cause the network function to define a user plane function decomposition structure for decomposing a functionality of a user plane function element or instance in a mobile communication system, the user plane function decomposition structure comprising multiple entities and multiple identifiers, each entity of the multiple entities being dedicated to perform at least part of the functionality of the user plane function element or instance and being associated to a respective one of the multiple identifiers, each identifier of the multiple identifiers corresponding to at least part of the functionality of the user plane function element or instance and associated to one or more entities of the multiple entities, and wherein respective entities of the multiple entities associated to a same identifier belong to a same entity set defining a set of entities which are functionally equivalent, interchangeable and share context data.

## Patentansprüche

1. Vorrichtung eines Benutzerebenenfunktionselements oder einer Benutzerebenenfunktionsinstanz in einem mobilen Kommunikationssystem, die Folgendes umfasst:
Mittel zum Auslegen (810) einer Benutzerebenenfunktionszerlegungsstruktur zum Zerlegen einer Funktionalität des Benutzerebenenfunktionselements oder der Benutzerebenenfunktionsinstanz, wobei die Benutzerebenenfunktionszerlegungsstruktur mehrere Entitäten und mehrere Kennungen umfasst, wobei jede Entität der mehreren Entitäten dediziert ist, mindestens einen Teil der Funktionalität des Benutzerebenenfunktionselements oder der Benutzerebenenfunktionsinstanz durchzuführen, und mit einer jeweiligen der mehreren Kennungen verknüpft ist, wobei jede Kennung der mehreren Kennungen mindestens einem Teil der Funktionalität des Benutzerebenenfunktionselements oder der Benutzerebenenfunktionsinstanz entspricht und mit einer oder mehreren Entitäten der mehreren Entitäten verknüpft ist, und wobei jeweilige Entitäten der mehreren Entitäten, die mit einer selben Kennung der mehreren Kennungen verknüpft sind, zu einem selben Entitätensatz gehören, der einen Satz von Entitäten definiert, die funktionsgleich und austauschbar sind und Kontextdaten gemeinsam verwenden, und
Mittel zum Bekanntgeben (820) von Informationen über die Benutzerebenenfunktionszerlegungsstruktur.

2. Vorrichtung nach Anspruch 1, wobei
in der Benutzerebenenfunktionszerlegungsstruktur jede Entität eine Adresse zum Steuern eines Dienstes, einer Sitzung oder eines Verkehrs via das Benutzerebenenfunktionselement oder die Benutzerebenenfunktionsinstanz aufweist, mit der die Entität von einem anderen Netzwerkelement oder einer anderen Netzwerkinstanz, wie etwa einem Sitzungsverwaltungsfunktionselement oder einer Sitzungsverwaltungsfunktionsinstanz, adressierbar ist, und/oder
die Informationen über die Benutzerebenenfunktionszerlegungsstruktur eine Anzeige der Entitäten in der Benutzerebenenfunktionszerlegungsstruktur und Eigenschaften der einzelnen Entitäten der Benutzerebenenfunktionszerlegungsstruktur umfassen.

3. Vorrichtung nach Anspruch 2, die ferner Folgendes umfasst:
Auslösen eines anderen Netzwerkelements oder einer anderen Netzwerkinstanz, wie etwa einem Sitzungsverwaltungsfunktionselement oder einer Sitzungsverwaltungsfunktionsinstanz, um zum Durchführen einer Transaktion beim Steuern eines Dienstes, einer Sitzung oder eines Verkehrs via das Benutzerebenenfunktionselement oder die Benutzerebenenfunktionsinstanz eine Entität aus einem Entitätensatz auszuwählen.

4. Vorrichtung nach Anspruch 1, wobei
in der Benutzerebenenfunktionszerlegungsstruktur jeder Entitätensatz eine Adresse zum Steuern eines Dienstes, einer Sitzung oder eines Verkehrs via das Benutzerebenenfunktionselement oder die Benutzerebenenfunktionsinstanz aufweist, mit der der Entitätensatz von einem anderen Netzwerkelement oder einer anderen Netzwerkinstanz, wie etwa einem Sitzungsverwaltungsfunktionselement oder einer Sitzungsverwaltungsfunktionsinstanz, adressierbar ist, und/oder
die Informationen über die Benutzerebenenfunktionszerlegungsstruktur eine Anzeige der Entitätensätze in der Benutzerebenenfunktionszerlegungsstruktur und Eigenschaften der einzelnen Entitätensätze der Benutzerebenenfunktionszerlegungsstruktur umfassen.

5. Vorrichtung nach Anspruch 4, die ferner Folgendes umfasst:
Mittel zum Auswählen einer Entität zum Durchführen einer Transaktion beim Steuern eines Dienstes, einer Sitzung oder eines Verkehrs via das Benutzerebenenfunktionselement oder die Benutzerebenenfunktionsinstanz aus einem Entitätensatz.

6. Vorrichtung eines Sitzungsverwaltungsfunktionselements oder einer Benutzerebenenfunktionsinstanz in einem mobilen Kommunikationssystem, die Folgendes umfasst:
Mittel zum Erhalten (821) von Informationen über eine Benutzerebenenfunktionszerlegungsstruktur eines Benutzerebenenfunktionselements oder einer Benutzerebenenfunktionsinstanz, wobei die Benutzerebenenfunktionszerlegungsstruktur mehrere Entitäten und mehrere Kennungen umfasst, wobei jede Entität der mehreren Entitäten dediziert ist, mindestens einen Teil der Funktionalität des Benutzerebenenfunktionselements oder der Benutzerebenenfunktionsinstanz durchzuführen, und mit einer jeweiligen der mehreren Kennungen verknüpft ist, wobei jede Kennung der mehreren Kennungen mindestens einem Teil der Funktionalität des Benutzerebenenfunktionselements oder der Benutzerebenenfunktionsinstanz entspricht und mit einer oder mehreren Entitäten der mehreren Entitäten verknüpft ist, und wobei jeweilige Entitäten der mehreren Entitäten, die mit einer selben Kennung der mehreren Kennungen verknüpft sind, zu einem selben Entitätensatz gehören, der einen Satz von Entitäten definiert, die funktionsgleich und austauschbar sind und Kontextdaten gemeinsam verwenden, und
Mittel zum Herstellen (822) von mehreren Verknüpfungen mit dem Benutzerebenenfunktionselement oder der Benutzerebenenfunktionsinstanz auf Basis der Informationen, wobei jede Verknüpfung der mehreren Verknüpfungen mit einer Kennung der mehreren Kennungen der Benutzerebenenfunktionszerlegungsstruktur verknüpft ist.

7. Vorrichtung nach Anspruch 6, die ferner Folgendes umfasst:
Mittel zum Entdecken einer Entität, die eine Adresse zum Steuern eines Dienstes, einer Sitzung oder eines Verkehrs via das Benutzerebenenfunktionselement oder die Benutzerebenenfunktionsinstanz aufweist, mit der die Entität vom Sitzungsverwaltungsfunktionselement oder von der Sitzungsverwaltungsfunktionsinstanz adressierbar ist, in der Benutzerebenenfunktionszerlegungsstruktur,
wobei die Mittel zum Herstellen dazu ausgelegt sind, eine oder mehrere Verknüpfungen, die sich auf die Entität beziehen, die von den Mitteln zum Entdecken entdeckt werden, herzustellen.

8. Vorrichtung nach Anspruch 7, die ferner Folgendes umfasst:
Mittel zum Auswählen einer Entität zum Durchführen einer Transaktion beim Steuern eines Dienstes, einer Sitzung oder eines Verkehrs via das Benutzerebenenfunktionselement oder die Benutzerebenenfunktionsinstanz aus einem Entitätensatz, und
Mittel zum Übermitteln eines Befehls, einer Anweisung oder von Informationen zum Durchführen der Transaktion unter Verwendung der Entität, die von den Mitteln zum Auswählen ausgewählt wird, zum Benutzerebenenfunktionselement oder zur Benutzerebenenfunktionsinstanz.

9. Vorrichtung nach Anspruch 6, die ferner Folgendes umfasst:
Mittel zum Entdecken eines Entitätensatzes, wobei der Entitätensatz eine Adresse zum Steuern eines Dienstes, einer Sitzung oder eines Verkehrs via das Benutzerebenenfunktionselement oder die Benutzerebenenfunktionsinstanz aufweist, mit der der Entitätensatz vom Sitzungsverwaltungsfunktionselement oder von der Sitzungsverwaltungsfunktionsinstanz adressierbar ist, in der Benutzerebenenfunktionszerlegungsstruktur,
wobei die Mittel zum Herstellen dazu ausgelegt sind, eine oder mehrere Verknüpfungen, die sich auf den Entitätensatz beziehen, die von den Mitteln zum Entdecken entdeckt wird, herzustellen.

10. Vorrichtung nach Anspruch 9, die ferner Folgendes umfasst:
Mittel zum Auswählen eines Entitätensatzes zum Durchführen einer Transaktion beim Steuern eines Dienstes, einer Sitzung oder eines Verkehrs via das Benutzerebenenfunktionselement oder die Benutzerebenenfunktionsinstanz, und
Mittel zum Übermitteln eines Befehls, einer Anweisung oder von Informationen zum Durchführen der Transaktion unter Verwendung des Entitätensatzes, der von den Mitteln zum Auswählen ausgewählt wird, zum Benutzerebenenfunktionselement oder zur Benutzerebenenfunktionsinstanz.

11. Vorrichtung eines Netzwerkrepositoriumsfunktionselements oder einer Netzwerkrepositoriumsfunktionsinstanz in einem mobilen Kommunikationssystem, die Folgendes umfasst:
Mittel zum Erhalten (831) von Informationen über eine Benutzerebenenfunktionszerlegungsstruktur eines Benutzerebenenfunktionselements oder einer Benutzerebenenfunktionsinstanz, wobei die Benutzerebenenfunktionszerlegungsstruktur mehrere Entitäten und mehrere Kennungen umfasst, wobei jede Entität der mehreren Entitäten dediziert ist, mindestens einen Teil der Funktionalität des Benutzerebenenfunktionselements oder der Benutzerebenenfunktionsinstanz durchzuführen, und mit einer jeweiligen der mehreren Kennungen verknüpft ist, wobei jede Kennung der mehreren Kennungen mindestens einem Teil der Funktionalität des Benutzerebenenfunktionselements oder der Benutzerebenenfunktionsinstanz entspricht und mit einer oder mehreren Entitäten der mehreren Entitäten verknüpft ist, und wobei jeweilige Entitäten der mehreren Entitäten, die mit einer selben Kennung verknüpft sind, zu einem selben Entitätensatz gehören, der einen Satz von Entitäten definiert, die funktionsgleich und austauschbar sind und Kontextdaten gemeinsam verwenden, und
Mittel zum Registrieren (832) der Informationen für das Benutzerebenenfunktionselement oder die Benutzerebenenfunktionsinstanz.

12. Verfahren eines Benutzerebenenfunktionselements oder einer Benutzerebenenfunktionsinstanz in einem mobilen Kommunikationssystem, das Folgendes umfasst:
Auslegen (S110) einer Benutzerebenenfunktionszerlegungsstruktur zum Zerlegen einer Funktionalität des Benutzerebenenfunktionselements oder der Benutzerebenenfunktionsinstanz, wobei die Benutzerebenenfunktionszerlegungsstruktur mehrere Entitäten und mehrere Kennungen umfasst, wobei jede Entität der mehreren Entitäten dediziert ist, mindestens einen Teil der Funktionalität des Benutzerebenenfunktionselements oder der Benutzerebenenfunktionsinstanz durchzuführen, und mit einer jeweiligen der mehreren Kennungen verknüpft ist, wobei jede Kennung der mehreren Kennungen mindestens einem Teil der Funktionalität des Benutzerebenenfunktionselements oder der Benutzerebenenfunktionsinstanz entspricht und mit einer oder mehreren Entitäten der mehreren Entitäten verknüpft ist, und wobei jeweilige Entitäten der mehreren Entitäten, die mit einer selben Kennung verknüpft sind, zu einem selben Entitätensatz gehören, der einen Satz von Entitäten definiert, die funktionsgleich und austauschbar sind und Kontextdaten gemeinsam verwenden, und
Bekanntgeben (S120) von Informationen über die Benutzerebenenfunktionszerlegungsstruktur.

13. Verfahren eines Sitzungsverwaltungsfunktionselements oder einer Sitzungsverwaltungsfunktionsinstanz in einem mobilen Kommunikationssystem, das Folgendes umfasst:
Erhalten (S210) von Informationen über eine Benutzerebenenfunktionszerlegungsstruktur eines Benutzerebenenfunktionselements oder einer Benutzerebenenfunktionsinstanz, wobei die Benutzerebenenfunktionszerlegungsstruktur mehrere Entitäten und mehrere Kennungen umfasst, wobei jede Entität der mehreren Entitäten dediziert ist, mindestens einen Teil der Funktionalität des Benutzerebenenfunktionselements oder der Benutzerebenenfunktionsinstanz durchzuführen, und mit einer jeweiligen der mehreren Kennungen verknüpft ist, wobei jede Kennung der mehreren Kennungen mindestens einem Teil der Funktionalität des Benutzerebenenfunktionselements oder der Benutzerebenenfunktionsinstanz entspricht und mit einer oder mehreren Entitäten der mehreren Entitäten verknüpft ist, und wobei jeweilige Entitäten der mehreren Entitäten, die mit einer selben Kennung verknüpft sind, zu einem selben Entitätensatz gehören, der einen Satz von Entitäten definiert, die funktionsgleich und austauschbar sind und Kontextdaten gemeinsam verwenden, und
Herstellen (S220) von mehreren Verknüpfungen mit dem Benutzerebenenfunktionselement oder der Benutzerebenenfunktionsinstanz auf Basis der Informationen, wobei jede Verknüpfung der mehreren Verknüpfungen mit einer Kennung der mehreren Kennungen der Benutzerebenenfunktionszerlegungsstruktur verknüpft ist.

14. Verfahren eines Netzwerkrepositoriumsfunktionselements oder einer Netzwerkrepositoriumsfunktionsinstanz in einem mobilen Kommunikationssystem, das Folgendes umfasst:
Erhalten (S310) von Informationen über eine Benutzerebenenfunktionszerlegungsstruktur eines Benutzerebenenfunktionselements oder einer Benutzerebenenfunktionsinstanz, wobei die Benutzerebenenfunktionszerlegungsstruktur mehrere Entitäten und mehrere Kennungen umfasst, wobei jede Entität der mehreren Entitäten dediziert ist, mindestens einen Teil der Funktionalität des Benutzerebenenfunktionselements oder der Benutzerebenenfunktionsinstanz durchzuführen, und mit einer jeweiligen der mehreren Kennungen verknüpft ist, wobei jede Kennung der mehreren Kennungen mindestens einem Teil der Funktionalität des Benutzerebenenfunktionselements oder der Benutzerebenenfunktionsinstanz entspricht und mit einer oder mehreren Entitäten der mehreren Entitäten verknüpft ist, und wobei jeweilige Entitäten der mehreren Entitäten, die mit einer selben Kennung verknüpft sind, zu einem selben Entitätensatz gehören, der einen Satz von Entitäten definiert, die funktionsgleich und austauschbar sind und Kontextdaten gemeinsam verwenden, und
Registrieren (S320) der Informationen für das Benutzerebenenfunktionselement oder die Benutzerebenenfunktionsinstanz.

15. Computerimplementierte Datenstruktur oder computerimplementiertes Datenformat, die auf einem Medium oder als eine elektromagnetische Trägerwelle verkörpert sind und Anweisungen umfassen, die, wenn sie auf einem Prozessor einer Netzwerkfunktion laufen, die Netzwerkfunktion dazu auslegen, eine Benutzerebenenfunktionszerlegungsstruktur zum Zerlegen einer Funktionalität eines Benutzerebenenfunktionselements oder einer Benutzerebenenfunktionsinstanz in einem mobilen Kommunikationssystem zu definieren, wobei die Benutzerebenenfunktionszerlegungsstruktur mehrere Entitäten und mehrere Kennungen umfasst, wobei jede Entität der mehreren Entitäten dediziert ist, mindestens einen Teil der Funktionalität des Benutzerebenenfunktionselements oder der Benutzerebenenfunktionsinstanz durchzuführen, und mit einer jeweiligen der mehreren Kennungen verknüpft ist, wobei jede Kennung der mehreren Kennungen mindestens einem Teil der Funktionalität des Benutzerebenenfunktionselements oder der Benutzerebenenfunktionsinstanz entspricht und mit einer oder mehreren Entitäten der mehreren Entitäten verknüpft ist, und wobei jeweilige Entitäten der mehreren Entitäten, die mit einer selben Kennung verknüpft sind, zu einem selben Entitätensatz gehören, der einen Satz von Entitäten definiert, die funktionsgleich und austauschbar sind und Kontextdaten gemeinsam verwenden.

## Revendications

1. Appareil d'un élément ou d'une instance de fonction de plan utilisateur dans un système de communication mobile, comprenant :
des moyens pour configurer (810) une structure de décomposition de fonction de plan utilisateur pour décomposer une fonctionnalité de l'élément ou de l'instance de fonction de plan utilisateur, la structure de décomposition de fonction de plan utilisateur comprenant de multiples entités et de multiples identifiants, chaque entité des multiples entités étant dédiée à la réalisation d'au moins une partie de la fonctionnalité de l'élément ou de l'instance de fonction de plan utilisateur et étant associée à un identifiant respectif des multiples identifiants, chaque identifiant des multiples identifiants correspondant à au moins une partie de la fonctionnalité de l'élément ou de l'instance de fonction de plan utilisateur et étant associé à une ou plusieurs entités des multiples entités, et dans lequel des entités respectives des multiples entités associées à un même identifiant des multiples identifiants appartiennent à un même ensemble d'entités définissant un ensemble d'entités qui sont fonctionnellement équivalentes, interchangeables et qui partagent des données de contexte, et
des moyens pour annoncer (820) des informations sur la structure de décomposition de fonction de plan utilisateur.

2. Appareil selon la revendication 1, dans lequel
dans la structure de décomposition de fonction de plan utilisateur, chaque entité a une adresse pour contrôler un service, une session ou un trafic via l'élément ou l'instance de fonction de plan utilisateur, grâce à laquelle l'entité peut être adressée par un autre élément ou une autre instance de réseau, tel qu'un élément ou une instance de fonction de gestion de session, et/ou
les informations sur la structure de décomposition de fonction de plan utilisateur comprennent une indication des entités dans la structure de décomposition de fonction de plan utilisateur et des propriétés des entités individuelles de la structure de décomposition de fonction de plan utilisateur.

3. Appareil selon la revendication 2, comprenant en outre :
le déclenchement d'un autre élément ou d'une autre instance de réseau, tel qu'un élément ou une instance de fonction de gestion de session, pour sélectionner dans un ensemble d'entités une entité pour effectuer une transaction lors du contrôle d'un service, une session ou un trafic via l'élément ou l'instance de fonction de plan utilisateur.

4. Appareil selon la revendication 1, dans lequel
dans la structure de décomposition de fonction de plan utilisateur, chaque ensemble d'entités a une adresse pour contrôler un service, une session ou un trafic via l'élément ou l'instance de fonction de plan utilisateur, grâce à laquelle l'ensemble d'entités peut être adressé par un autre élément ou une autre instance de réseau, tel qu'un élément ou une instance de fonction de gestion de session, et/ou
les informations sur la structure de décomposition de fonction de plan utilisateur comprennent une indication des ensembles d'entités dans la structure de décomposition de fonction de plan utilisateur et des propriétés des ensembles d'entités individuels de la structure de décomposition de fonction de plan utilisateur.

5. Appareil selon la revendication 4, comprenant en outre :
des moyens pour sélectionner dans un ensemble d'entités une entité pour effectuer une transaction lors du contrôle un service, une session ou un trafic via l'élément ou l'instance de fonction de plan utilisateur.

6. Appareil d'un élément ou d'une instance de fonction de gestion de session dans un système de communication mobile, comprenant :
des moyens pour obtenir (821) des informations sur une structure de décomposition de fonction de plan utilisateur d'un élément ou d'une instance de fonction de plan utilisateur, la structure de décomposition de fonction de plan utilisateur comprenant de multiples entités et de multiples identifiants, chaque entité des multiples entités étant dédiée à la réalisation d'au moins une partie de la fonctionnalité de l'élément ou de l'instance de fonction de plan utilisateur et étant associée à un identifiant respectif des multiples identifiants, chaque identifiant des multiples identifiants correspondant à au moins une partie de la fonctionnalité de l'élément ou de l'instance de fonction de plan utilisateur et étant associé à une ou plusieurs entités des multiples entités, et dans lequel des entités respectives des multiples entités associées à un même identifiant des multiples identifiants appartiennent à un même ensemble d'entités définissant un ensemble d'entités qui sont fonctionnellement équivalentes, interchangeables et qui partagent des données de contexte, et
des moyens pour établir (822) de multiples associations à l'élément ou à l'instance de fonction de plan utilisateur sur la base des informations, chaque association des multiples associations étant associée à un identifiant des multiples identifiants de la structure de décomposition de fonction de plan utilisateur.

7. Appareil selon la revendication 6, comprenant en outre :
des moyens pour découvrir, dans la structure de décomposition de fonction de plan utilisateur, une entité ayant une adresse pour contrôler un service, une session ou un trafic via l'élément ou l'instance de fonction de plan utilisateur, grâce à laquelle l'entité peut être adressée par l'élément ou l'instance de fonction de gestion de session,
dans lequel les moyens d'établissement sont configurés pour établir une des multiples associations liées à l'entité découverte par les moyens de découverte.

8. Appareil selon la revendication 7, comprenant en outre :
des moyens pour sélectionner dans un ensemble d'entités une entité pour effectuer une transaction lors du contrôle d'un service, une session ou un trafic via l'élément ou l'instance de fonction de plan utilisateur, et
des moyens pour transférer à l'élément ou à l'instance de fonction de plan utilisateur, une commande, une instruction ou des informations pour effectuer la transaction en utilisant l'entité qui a été sélectionnée par les moyens de sélection.

9. Appareil selon la revendication 6, comprenant en outre :
des moyens pour découvrir, dans la structure de décomposition de fonction de plan utilisateur, un ensemble d'entités, ledit ensemble d'entités ayant une adresse pour contrôler un service, une session ou un trafic via l'élément ou l'instance de fonction de plan utilisateur, grâce à laquelle l'ensemble d'entités peut être adressé par l'élément ou l'instance de fonction de gestion de session,
dans lequel les moyens d'établissement sont configurés pour établir une des multiples associations liées à l'ensemble d'entités découvertes par les moyens de découverte.

10. Appareil selon la revendication 9, comprenant en outre :
des moyens pour sélectionner un ensemble d'entités pour effectuer une transaction lors du contrôle un service, une session ou un trafic via l'élément ou l'instance de fonction de plan utilisateur, et
des moyens pour transférer à l'élément ou à l'instance de fonction de plan utilisateur, une commande, une instruction ou des informations pour effectuer la transaction en utilisant l'ensemble d'entités qui est sélectionné par les moyens de sélection.

11. Appareil d'un élément ou d'une instance de fonction de référentiel de réseau dans un système de communication mobile, comprenant :
des moyens pour obtenir (831) des informations sur une structure de décomposition de fonction de plan utilisateur d'un élément ou d'une instance de fonction de plan utilisateur, la structure de décomposition de fonction de plan utilisateur comprenant de multiples entités et de multiples identifiants, chaque entité des multiples entités étant dédiée à la réalisation d'au moins une partie de la fonctionnalité de l'élément ou de l'instance de fonction de plan utilisateur et étant associée à un identifiant respectif des multiples identifiants, chaque identifiant des multiples identifiants correspondant à au moins une partie de la fonctionnalité de l'élément ou de l'instance de fonction de plan utilisateur et étant associé à une ou plusieurs entités des multiples entités, et dans lequel des entités respectives des multiples entités associées à un même identifiant appartiennent à un même ensemble d'entités définissant un ensemble d'entités qui sont fonctionnellement équivalentes, interchangeables et qui partagent des données de contexte, et
des moyens pour enregistrer (832) les informations pour l'élément ou l'instance de fonction de plan utilisateur.

12. Procédé d'un élément ou d'une instance de fonction de plan utilisateur dans un système de communication mobile, comprenant les étapes suivantes :
configurer (S110) une structure de décomposition de fonction de plan utilisateur pour décomposer une fonctionnalité de l'élément ou de l'instance de fonction de plan utilisateur, la structure de décomposition de fonction de plan utilisateur comprenant de multiples entités et de multiples identifiants, chaque entité des multiples entités étant dédiée à la réalisation d'au moins une partie de la fonctionnalité de l'élément ou de l'instance de fonction de plan utilisateur et étant associée à un identifiant respectif des multiples identifiants, chaque identifiant des multiples identifiants correspondant à au moins une partie de la fonctionnalité de l'élément ou de l'instance de fonction de plan utilisateur et étant associé à une ou plusieurs entités des multiples entités, et dans lequel des entités respectives des multiples entités associées à un même identifiant appartiennent à un même ensemble d'entités définissant un ensemble d'entités qui sont fonctionnellement équivalentes, interchangeables et qui partagent des données de contexte, et
annoncer (S120) des informations sur la structure de décomposition de fonction de plan utilisateur.

13. Procédé d'un élément ou d'une instance de fonction de gestion de session dans un système de communication mobile, comprenant les étapes suivantes :
obtenir (S210) des informations sur une structure de décomposition de fonction de plan utilisateur d'un élément ou d'une instance de fonction de plan utilisateur, la structure de décomposition de fonction de plan utilisateur comprenant de multiples entités et de multiples identifiants, chaque entité des multiples entités étant dédiée à la réalisation d'au moins une partie de la fonctionnalité de l'élément ou de l'instance de fonction de plan utilisateur et étant associée à un identifiant respectif des multiples identifiants, chaque identifiant des multiples identifiants correspondant à au moins une partie de la fonctionnalité de l'élément ou de l'instance de fonction de plan utilisateur et étant associé à une ou plusieurs entités des multiples entités, et dans lequel des entités respectives des multiples entités associées à un même identifiant appartiennent à un même ensemble d'entités définissant un ensemble d'entités qui sont fonctionnellement équivalentes, interchangeables et qui partagent des données de contexte, et
établir (S220) de multiples associations à l'élément ou à l'instance de fonction de plan utilisateur sur la base des informations, chaque association des multiples associations étant associée à un identifiant des multiples identifiants de la structure de décomposition de fonction de plan utilisateur.

14. Procédé d'un élément ou d'une instance de fonction de référentiel de réseau dans un système de communication mobile, comprenant les étapes suivantes :
obtenir (S310) des informations sur une structure de décomposition de fonction de plan utilisateur d'un élément ou d'une instance de fonction de plan utilisateur, la structure de décomposition de fonction de plan utilisateur comprenant de multiples entités et de multiples identifiants, chaque entité des multiples entités étant dédiée à la réalisation d'au moins une partie de la fonctionnalité de l'élément ou de l'instance de fonction de plan utilisateur et étant associée à un identifiant respectif des multiples identifiants, chaque identifiant des multiples identifiants correspondant à au moins une partie de la fonctionnalité de l'élément ou de l'instance de fonction de plan utilisateur et étant associé à une ou plusieurs entités des multiples entités, et dans lequel des entités respectives des multiples entités associées à un même identifiant appartiennent à un même ensemble d'entités définissant un ensemble d'entités qui sont fonctionnellement équivalentes, interchangeables et qui partagent des données de contexte, et
enregistrer (S320) les informations pour l'élément ou l'instance de fonction de plan utilisateur.

15. Structure ou format de données mis en œuvre par ordinateur, incorporés sur un support ou sous forme d'onde porteuse électromagnétique, comprenant des instructions qui, lorsqu'elles sont exécutées sur un processeur d'une fonction de réseau, amènent la fonction de réseau à définir une structure de décomposition de fonction de plan utilisateur pour décomposer une fonctionnalité d'un élément ou d'une instance de fonction de plan utilisateur dans un système de communication mobile, la structure de décomposition de fonction de plan utilisateur comprenant de multiples entités et de multiples identifiants, chaque entité des multiples entités étant dédiée à la réalisation d'au moins une partie de la fonctionnalité de l'élément ou de l'instance de fonction de plan utilisateur et étant associée à un identifiant respectif des multiples identifiants, chaque identifiant des multiples identifiants correspondant à au moins une partie de la fonctionnalité de l'élément ou de l'instance de fonction de plan utilisateur et étant associé à une ou plusieurs entités des multiples entités, et dans lesquels des entités respectives des multiples entités associées à un même identifiant appartiennent à un même ensemble d'entités définissant un ensemble d'entités qui sont fonctionnellement équivalentes, interchangeables et qui partagent des données de contexte.
